(19) Europäisches Patentamt
European Patent Office
Office européen des brevets

(11) EP 4 694 068 A1

(12) **EUROPEAN PATENT APPLICATION**
published in accordance with Art. 153(4) EPC

(43) Date of publication:
**11.02.2026 Bulletin 2026/07**

(21) Application number: **24784220.6**

(22) Date of filing: **01.04.2024**

(51) International Patent Classification (IPC):
***H04L 43/02*** *(2022.01)*

(52) Cooperative Patent Classification (CPC):
**H04B 17/309; H04L 1/00; H04L 43/02**

(86) International application number:
**PCT/CN2024/085232**

(87) International publication number:
**WO 2024/208136 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 CN 202310371464**

(71) Applicant: **Vivo Software Technology Co., Ltd.
Beijing 100000 (CN)**

(72) Inventors:
• **JIA, Chenglu
Beijing 100000 (CN)**
• **SUN, Peng
Beijing 100000 (CN)**
• **YANG, Ang
Beijing 100000 (CN)**
• **WANG, Yuanyuan
Beijing 100000 (CN)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **INFORMATION TRANSMISSION METHOD AND APPARATUS, INFORMATION PROCESSING METHOD AND APPARATUS, AND TERMINAL AND NETWORK-SIDE DEVICE**

(57) The present application belongs to the technical field of communications. Disclosed are an information transmission method and apparatus, an information processing method and apparatus, and a terminal and a network-side device. The information transmission method in the embodiments of the present application comprises: a first device performing a first instance of processing on first time-domain channel state information, so as to obtain second time-domain channel state information, wherein the data volume of the first time-domain channel state information is greater than the data volume of the second time-domain channel state information; and the first device sending first information to a first node, wherein the first information is information related to the second time-domain channel state information, and the first time-domain channel state information is time-domain channel state information that is obtained through measurement by the first device on the basis of a reference signal.

FIG. 2

**Description**

**CROSS-REFERENCE TO RELATED APPLICATIONS**

This application claims priority to Chinese Patent Application No. 202310371464.2 filed in China on April 7, 2023, which is incorporated herein by reference in its entirety.

**TECHNICAL FIELD**

This application relates to the field of communication technologies, and specifically, to an information transmission method, an information processing method, an apparatus, a terminal, and a network-side device.

**BACKGROUND**

In the conventional technology, an artificial intelligence (Artificial Intelligence, AI) model can be used to calculate positioning information of a terminal based on time-domain channel state information. In the process, the terminal needs to send, to a network-side device, the time-domain channel state information, for example, a power delay profile (Power Delay Profile, PDP) or a channel impulse response (Channel Impulse Response, CIR). A time-domain length of the time-domain channel state information is mostly 256, so that reporting of the time-domain channel state information needs to consume a large quantity of air interface resources.

**SUMMARY**

Embodiments of this application provide an information transmission method, an information processing method, an apparatus, a terminal, and a network-side device. Before reporting time-domain channel state information, a first device may perform certain processing on the time-domain channel state information, to reduce a data size of processed time-domain channel state information, and report the processed time-domain channel state information to a first node. In this way, air interface resources consumed by reporting the processed time-domain channel state information can be reduced.

According to a first aspect, an information transmission method is provided. The method includes:

performing, by a first device, first processing on first time-domain channel state information, to obtain second time-domain channel state information, where a data size of the first time-domain channel state information is greater than a data size of the second time-domain channel state information; and
sending, by the first device, first information to a first node, where the first information is related information of the second time-domain channel state information, where
the first time-domain channel state information is time-domain channel state information obtained by the first device through measurement based on a reference signal.

According to a second aspect, an information processing method is provided. The method includes:

receiving, by a first node, first information from a first device, where the first information includes related information of second time-domain channel state information obtained through first processing, a data size of the second time-domain channel state information is less than a data size of first time-domain channel state information, and the first time-domain channel state information is time-domain channel state information before the first processing;
determining, by the first node based on the first information, target time-domain channel state information; and
inputting, by the first node, the target time-domain channel state information into a target model, and obtaining at least one of the following outputs of the target model:

position information of a terminal, where the terminal is related to the first device; or
feature information related to position information of the terminal.

According to a third aspect, an information transmission apparatus is provided, including:

a first processing module, configured to perform first processing on first time-domain channel state information, to obtain second time-domain channel state information, where a data size of the first time-domain channel state information is greater than a data size of the second time-domain channel state information; and
a first sending module, configured to send first information to a first node, where the first information is related information of the second time-domain channel state information, where
the first time-domain channel state information is time-domain channel state information obtained by the first device through measurement based on a reference signal.

According to a fourth aspect, an information processing apparatus is provided, including:

a first receiving module, configured to receive first information from a first device, where the first information includes related information of second time-domain channel state information obtained through first processing, a data size of the second time-domain channel state information is less than a data size of first time-domain channel state information, and the first time-domain channel state information is time-domain channel state information before the first processing;
a first determining module, configured to determine target time-domain channel state information based on the first information; and
a second processing module, configured to input the target time-domain channel state information into a target model, and obtain at least one of the following outputs of the target model:

position information of a terminal, where the terminal is related to the first device; or
feature information related to position information of the terminal.

According to a fifth aspect, a terminal is provided. The terminal includes a processor and a memory. The memory stores a program or instructions that can be run on the processor, and when the program or the instructions are executed by the processor, steps of the method according to the first aspect are implemented.
According to a sixth aspect, a terminal is provided, including a processor and a communication interface. The processor is configured to perform first processing on first time-domain channel state information, to obtain second time-domain channel state information, where a data size of the first time-domain channel state information is greater than a data size of the second time-domain channel state information; and the communication interface is configured to send first information to a first node, where the first information is related information of the second time-domain channel state information, where the first time-domain channel state information is time-domain channel state information obtained by the terminal through measurement based on a reference signal.
According to a seventh aspect, a network-side device is provided. The network-side device includes a processor and a memory.
In a case that the network-side device is a first device, the memory stores a program or instructions that can be run on the processor, and when the program or the instructions are executed by the processor, steps of the method according to the first aspect are implemented.
In a case that the network-side device is a first node, the memory stores a program or instructions that can be run on the processor, and when the program or the instructions are executed by the processor, steps of the method according to the second aspect are implemented.
According to an eighth aspect, a network-side device is provided, including a processor and a communication interface.
In a case that the network-side device is a first device, the processor is configured to perform first processing on first time-domain channel state information, to obtain second time-domain channel state information, where a data size of the first time-domain channel state information is greater than a data size of the second time-domain channel state information; and the communication interface is configured to send first information to a first node, where the first information is related information of the second time-domain channel state information, where the first time-domain channel state information is time-domain channel state information obtained by the first device through measurement based on a reference signal.
In a case that the network-side device is a first node, the communication interface is configured to receive first information from a terminal, where the first information includes related information of second time-domain channel state information obtained through first processing, a data size of the second time-domain channel state information is less than a data size of first time-domain channel state information, and the first time-domain channel state information is time-domain channel state information before the first processing; and the processor is configured to: determine target time-domain channel state information based on the first information, and input the target time-domain channel state information into a target model, and obtain at least one of the following outputs of the target model:

position information of a terminal, where the terminal is in communication connection to the network-side device; or
feature information related to position information of the terminal.

According to a ninth aspect, a readable storage medium is provided. The readable storage medium stores a program or instructions, and when the program or the instructions are executed by a processor, steps of the method according to the first aspect are implemented, or steps of the method according to the second aspect are implemented.

According to a tenth aspect, a wireless communication system is provided, including: a first device and a first node, where the first device may be configured to perform steps of the method according to the first aspect, and the first node may be configured to perform steps of the method according to the second aspect.

According to an eleventh aspect, a chip is provided. The chip includes a processor and a communication interface. The communication interface is coupled to the processor, and the processor is configured to run a program or instructions, to implement the method according to the first aspect or implement the method according to the second aspect.

According to a twelfth aspect, a computer program/program product is provided. The computer program/program product is stored in a storage medium. The program/program product is executed by at least one processor, to implement steps of the information transmission method according to the first aspect, or steps of the information processing method according to the second aspect.

In embodiments of this application, the first device performs the first processing on the first time-domain channel state information, to obtain the second time-domain channel state information, where the data size of the first time-domain channel state information is greater than the data size of the second time-domain channel state information; and the first device sends the first information to the first node, where the first information is the related information of the second time-domain channel state information. The first device performs the first processing on the first time-domain channel state information that needs to be reported, to obtain the second time-domain channel state information with a smaller data size, and then reports the related information of the second time-domain channel state information to the first node. In this way, air interface resources consumed by reporting the related information of the second time-domain channel state information can be reduced.

## BRIEF DESCRIPTION OF THE DRAWINGS

FIG. 1 is a diagram of a structure of a wireless communication system to which an embodiment of this application is applicable;

FIG. 2 is a diagram of a structure of an information transmission method according to an embodiment of this application;

FIG. 3a is a diagram of an architecture of a neural network model;

FIG. 3b is a diagram of a neuron;

FIG. 4 is a flowchart of an information processing method according to an embodiment of this application;

FIG. 5 is a curve diagram of distribution of bits of second time-domain channel state information according to an embodiment of this application;

FIG. 6 is a diagram of a structure of an information transmission apparatus according to an embodiment of this application;

FIG. 7 is a diagram of a structure of an information processing apparatus according to an embodiment of this application;

FIG. 8 is a diagram of a structure of a communication device according to an embodiment of this application;

FIG. 9 is a diagram of a structure of a terminal according to an embodiment of this application;

FIG. 10 is a diagram of a structure of a network-side device according to an embodiment of this application; and

FIG. 11 is a diagram of a structure of another network-side device according to an embodiment of this application.

## DETAILED DESCRIPTION

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application fall within the protection scope of this application.

The terms "first", "second", and the like in this application are intended to distinguish similar objects, but are not necessarily used to describe a specific order or sequence. It should be understood that terms used in such a way are interchangeable in proper circumstances, so that embodiments of this application described herein can be implemented in an order different from the order illustrated or described herein. In addition, the objects distinguished by "first" and "second" are usually one category, and a quantity of objects is not limited. For example, the first object may be one or more. In addition, "or" in this application indicates at least one of connected objects. For example, "A or B" covers three solutions, that is, solution 1: including A and excluding B; solution 2: including B and excluding A; and solution 3: including both A and B. The character "/" in this specification generally indicates an "or" relationship between associated objects.

The term "indication" in this application may be a direct indication (or an explicit indication), or may be an indirect indication (or an implicit indication). The direct indication may be understood as that a transmitter explicitly notifies a receiver of content such as specific information, an operation that needs to be performed, or a request result in a sent indication. The indirect indication may be understood as that a receiver determines corresponding information according to an indication sent by a transmitter, or performs determining and determines an operation that needs to be performed or a request result according to a determining result.

It should be noted that, the technology described in embodiments of this application is not limited to being used in a long term evolution (Long Term Evolution, LTE)/LTE-advanced (LTE-Advanced, LTE-A) system, and may be further applied to another wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" are often interchangeably used in embodiments of this application, and the technology described may be used for both the system and radio technology mentioned above, and used for another system and radio technology. The following descriptions describe a new radio (New Radio, NR) system for purposes of example, and the term of NR is used in most of the following descriptions, but these technologies are also applicable to a system beyond the NR system, for example, a 6th generation (6th Generation, 6G) communication system.

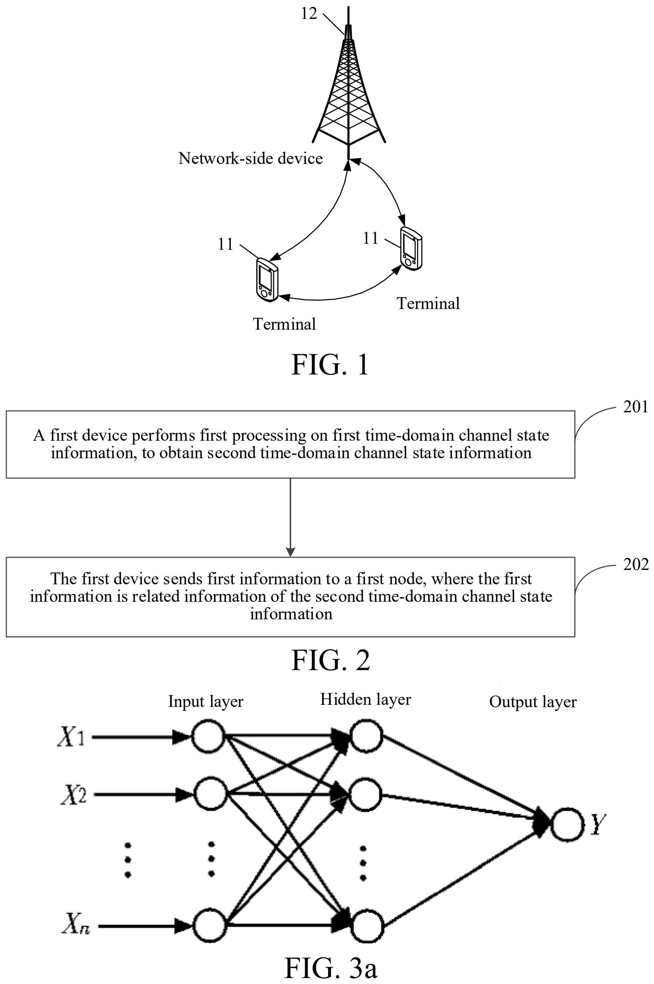

FIG. 1 is a block diagram of a wireless communication system to which an embodiment of this application is applicable. The wireless communication system includes a terminal 11 and a network-side device 12. The terminal 11 may be a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), an in-vehicle device (Vehicle User Equipment, VUE), a ship device, pedestrian user equipment (Pedestrian User Equipment, PUE), a smart home appliance (a home device with a wireless communication function, such as a refrigerator, a television, a washing machine, furniture, or the like), a game console, a personal computer (Personal Computer, PC), a teller machine, a self-service machine, or another terminal-side device. The wearable device includes: a smart watch, a smart band, smart headphones, smart glasses, smart jewelry (a smart bangle, a smart bracelet, a smart ring, a smart necklace, a smart ankle bracelet, a smart anklet, and the like), a smart wristband, smart clothing, and the like. The in-vehicle device may alternatively be referred to as an in-vehicle terminal, an in-vehicle controller, an in-vehicle module, an in-vehicle component, an in-vehicle chip, an in-vehicle unit, or the like. It should be noted that, a specific type of the terminal 11 is not limited in embodiments of this application. The network-side device 12 may include an access network device or a core network device. The access network device may alternatively be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a NodeB (NodeB, NB), an evolved NodeB (Evolved NodeB, eNB), a next generation NodeB (the next generation NodeB, gNB), a new radio NodeB (New Radio Node B, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the art. As long as the same technical effects are achieved, the base station is not limited to a specific technology vocabulary. It should be noted that, only a base station in an NR system is used as an example for description in embodiments of the application, and a specific type of base station is not limited.

The core network device may include, but is not limited to, at least one of the following: a core network node, a core network function, a location management function (Location Management Function, LMF), a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized Network Configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that, only a core network device in an NR system is used as an example for description in embodiments of this application, and a specific type of the core network device is not limited.

For ease of the understanding of an information transmission method and an information processing method provided in embodiments of this application, an application scenario of embodiments of this application is first described by using an example.

1. A measurement scenario of time-domain channel state information based on an uplink reference signal:

A terminal sends a reference signal to a network-side device, and the network-side device performs measurement on the reference signal, to obtain first time-domain channel state information. Then, the network-side device may perform first processing on the first time-domain channel state information, and send, to a node, for example, a core network device or an application server, second time-domain channel state information obtained after the first processing.

In this case, a first device may be the network-side device, and a first node may be the node, for example, the core network device or the application server, that can process the second time-domain channel state information by using a target model, to ensure terminal positioning.

2. A measurement scenario of time-domain channel state information based on a downlink reference signal:

A network-side device sends a reference signal to a terminal, and the terminal performs measurement on the reference signal, to obtain first time-domain channel state information. Then, the terminal may perform first processing on the first time-domain channel state information, and send, to a node, for example, an access network device, a core network device, or an application server, second time-domain channel state information obtained after the first processing.

In this case, a first device may be the terminal, and a first node may be the node, for example, the access network device, the core network device, or the application server, that can process the second time-domain channel state information by using a target model, to ensure terminal positioning.

For ease of description, in this embodiment of this application, an example in which the first device is a terminal, and the first node is a network-side device is usually used for description. This is not specifically limited herein.

An information transmission method, an information processing method, an information transmission apparatus, an information processing apparatus, and a related device according to embodiments of this application are described in detail below by using some embodiments and application scenarios thereof with reference to the accompanying drawings.

Refer to FIG. 2. An information transmission method provided in an embodiment of this application may be performed by a first device. The first device may be a terminal or a network-side device. The terminal may be the terminal 11 of various types listed in FIG. 1, or a terminal other than the terminal of the types listed in this embodiment shown in FIG. 1. The network-side device may be the network-side device 12 of various types listed in FIG. 1, or a network-side device other than the network-side device of the types listed in this embodiment shown in FIG. 1. This is not specifically limited herein.

As shown in FIG. 2, the information transmission method may include the following steps.

Step 201: A first device performs first processing on first time-domain channel state information, to obtain second time-domain channel state information, where a data size of the first time-domain channel state information is greater than a data size of the second time-domain channel state information.

Step 202: The first device sends first information to a first node, where the first information is related information of the second time-domain channel state information.

In this embodiment of this application, a target model is deployed on the first node, and the first device performs measurement and sends the time-domain channel state information to the first node, so that the first node inputs the time-domain channel state information to the target model, to obtain a result output by the target model. In this process, because the time-domain channel state information includes a plurality of pieces of channel state information at a time-domain sample, a data size of the time-domain channel state information is large. In a case that the first device directly sends the time-domain channel state information obtained through measurement, a large quantity of air interface resources are consumed. In this embodiment of this application, the first device performs certain processing on the time-domain channel state information obtained through measurement, to reduce a data size of processed time-domain channel state information. In this way, the time-domain channel state information with a reduced data size may be sent, to reduce air interface resources consumed by transmission of the time-domain channel state information.

The first node may be a network-side device, for example, an access network device or a core network device, or the first node may be any device with a target model, for example, an application server. For ease of description, in this embodiment of this application, an example in which the first node is an access network device, for example, a base station is usually used for description. This is not specifically limited herein.

It should be noted that, the target model in this embodiment of this application may be an AI model, or may be a machine learning (Machine Learning, ML) model. For ease of description, an example in which the target model is an AI model is used for description in this embodiment of this application.

The integration of the AI model into a wireless communication network to significantly improve technical indicators such as a throughput, a delay, a user capacity, and the like is an important task of a future wireless communication network. There are a plurality of implementations of the AI model, for example, a neural network, a decision tree, a support vector machine, a bayes classifier, and the like. A neural network is used as an example for description in this application, and a specific type of the AI model is not limited.

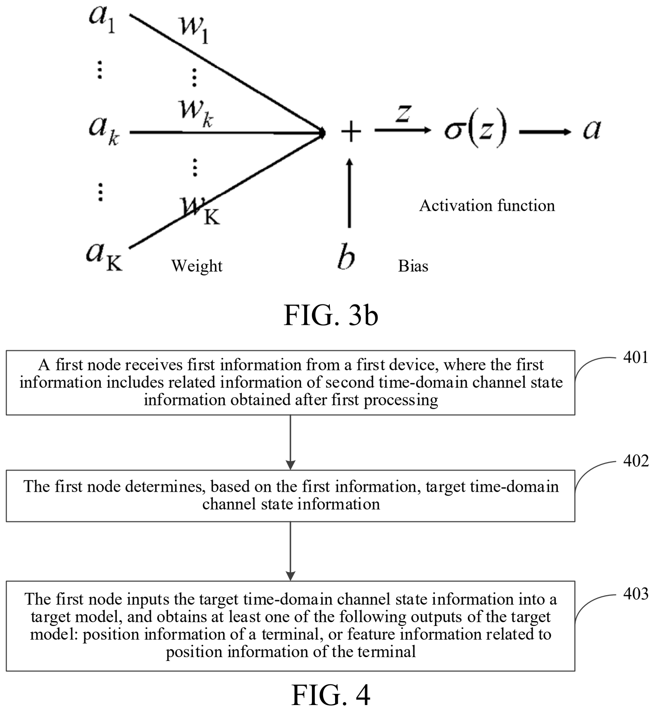

As shown in FIG. 3a, the neural network includes an input layer, a hidden layer, and an output layer. The neural network may predict a possible output result (Y) based on input information ($X_1 \sim X_n$) obtained by the input layer. The neural network includes a large quantity of neurons. As shown in FIG. 3b, parameters of the neurons include: input parameters $a_1 \sim a_K$, a weight w, a bias b, and an activation function $\sigma$ (z), and an output value a is obtained based on the parameters. Common activation functions include an S-type growth curve (Sigmoid) function, a hyperbolic tangent (tanh) function, a rectified linear unit (Rectified Linear Unit, ReLU, or referred to as a rectified linear unit) function, and the like. In the function, z in $\sigma$ (z) may be calculated according to the following formula:

$$z = a_1 w_1 + \cdots + a_k w_k + a_K w_K + b$$

where K represents a total quantity of input parameters.

Parameters of the neural network are optimized through an optimization algorithm. The optimization algorithm is a type of algorithm that is conducive to minimization or maximization of an objective function (sometimes referred to as a loss function). The objective function is usually a mathematical combination of a model parameter and data. For example, given the data X and the label Y corresponding to the data, one neural network f (.) is constructed. With the neural network, a predicted output f (x) can be obtained based on an input x, and a difference (f(x)-Y) between a predicted value and an actual value, that is, the loss function, can be calculated. A suitable W and b need to be found, to ensure that a value of the foregoing loss function reaches a minimum. A smaller loss value indicates that the neural network is closer to a neural network in an actual case.

Currently, common optimization algorithms are basically based on an error back propagation (error Back Propagation, BP) algorithm. A basic idea of the error back propagation algorithm is that a learning process consists of two processes, signal forward propagation and error back propagation. During the forward propagation, an input sample is transmitted from an input layer, processed layer by layer by each hidden layer, and then transmitted to an output layer. If an actual output of the output layer does not match a desired output, an error back propagation stage is entered. The error back propagation is to propagate an output error layer by layer back to the input layer through the hidden layers in a particular form, and assign the error to all units of each layer, to obtain an error signal of the units of each layer. The error signal is used as a basis for correcting a weight of each unit. The layer weight adjustment process for signal forward propagation and error back propagation is performed on a recurring basis. The process of constant weight adjustment is a learning training process of the network. The process proceeds until the error in the network output is reduced to an acceptable level, or until a preset quantity of learning times are reached.

The common optimization algorithms include gradient descent (Gradient Descent), stochastic gradient descent (Stochastic Gradient Descent, SGD), mini-batch gradient descent (mini-batch gradient descent), momentum (Momentum), Nesterov (stochastic gradient descent with momentum), adaptive gradient descent (Adaptive gradient descent, Adagrad), adaptive learning rate adjustment (Adadelta), root mean square prop (root mean square prop, RMSprop), adaptive moment estimation (Adaptive Moment Estimation, Adam), and the like.

The optimization algorithms in error back propagation obtain the gradient and pass the gradient to a previous layer based on an error/a loss obtained from the loss function, taking derivatives/bias of a current neuron, and adding effects of the learning rate, previous gradient/derivative/bias, and the like.

In an implementation, the target model may be used for outputting position information of a terminal. For example, in a case that the first device is a terminal, the target model may be used for outputting position information of the terminal; or in a case that the first device is a network-side device, the target model may be used for outputting position information of the terminal sending a reference signal.

Optionally, the position information of the terminal includes at least one of the following:

absolute position information of the terminal; or
relative position information of the terminal.

The absolute position information may include coordinate position information of the terminal, for example, global positioning system (Global Positioning System, GPS) positioning information.

The relative position information may be position information of the terminal relative to a reference point, for example, position information of the terminal relative to a base station.

In another implementation, the target model may be used for outputting an intermediate feature quantity related to a position of a terminal, that is, feature information related to position information.

Optionally, the feature information related to the position information includes at least one of the following of a line of sight (Line of Sight, LOS) radius:

time of arrival (Time of Arrival, TOA);
an angle of arrival (Angle of Arrival, AOA);
an angle of departure (Angle of Departure, AOD); or
a reference signal time difference (Reference Signal Time Different, RSTD).

In this implementation, the AI model may be used for determining, based on the second time-domain channel state information, the foregoing feature information related to the position of the terminal, and then the position information of the terminal may be calculated based on the foregoing feature information in an AI or non-AI manner.

It should be noted that, the foregoing LOS radius may be an actually existing LOS radius between the terminal and the network-side device, or may be an assumed LOS radius between the terminal and the network-side device. That is, regardless of an actual LOS radius existing between user equipment (User Equipment, UE) and a base station, TOA, an AOA, an AOD, an RSTD, and the like of the LOS radius between the UE and the base station may be determined according to this embodiment of this application, and further, the position information of the UE may then be determined.

Certainly, the target model may alternatively be used for outputting any other information related to the time-domain channel state information. For ease of description, in this embodiment of this application, an example in which the target model deployed by the network-side device is used for determining, based on the time-domain channel state information reported by the terminal, the position information of the terminal or the intermediate feature quantity related to the position of the terminal is used for description. This is not specifically limited herein.

In an implementation, the first time-domain channel state information may be channel state information in a particular time-domain range that is obtained by estimation by the first device by performing time-domain interval sampling measurement on a reference signal. For example, a time-domain length of a CIR/PDP that is input into the AI model may be 256, 128, 64, 32, or the like. The CIR is used as an example, and the CIR may be obtained in the following process: the first device measures a reference signal, performs sampling at a particular sampling rate to obtain a time-domain sampling signal, converts the time-domain sample into frequency domain through fast Fourier transform (Fast Fourier Transform, FFT), to obtain frequency-domain signal sampling, and may estimate a channel frequency-domain response based on a known pilot sequence, where the channel frequency-domain response is converted into a time-domain CIR through inverse fast Fourier transform (Inverse Fast Fourier Transform, IFFT).

Optionally, the time-domain channel state information in this embodiment of this application may include at least one of a CIR, a PDP, or a multipath power profile.

In this embodiment of this application, the first time-domain channel state information is time-domain channel state information obtained by the first device through measurement based on a reference signal.

Optionally, a reference signal of the first time-domain channel state information obtained through measurement may be at least one of a CSI reference signal (CSI Reference Signal, CSI-RS), a sounding reference signal (Sounding Reference Signal, SRS), a synchronization signal/physical broadcast channel signal block (or synchronization signal block) (Synchronization Signal and PBCH block, SSB), and a positioning reference signal (Positioning Reference Signal, PRS), where the CSI is the abbreviation for channel state information (Channel State Information).

Optionally, the first time-domain channel state information includes at least one of the following:

time-domain channel state information obtained through measurement based on at least one reference signal associated with the same transmission reception point TRP; or
time-domain channel state information obtained through measurement based on a reference signal associated with at least one TRP.

In an implementation, the data size of the information may be a quantity of bits (bits) of the information. In this case, the data size of the first time-domain channel state information is greater than the data size of the second time-domain channel state information, indicating that the quantity of bits of the first time-domain channel state information is greater than the quantity of bits of the second time-domain channel state information.

In another implementation, the data size of the information may be a quantity of time-domain samples of the information. In this case, the data size of the first time-domain channel state information is greater than the data size of the second time-domain channel state information, indicating that the quantity of time-domain samples of the first time-domain channel state information is greater than the quantity of time-domain samples of the second time-domain channel state information.

In this embodiment of this application, the data size of the time-domain channel state information may be reduced after the first processing. In this way, compared with that the first device sends, to the first node, the first time-domain channel state information before the first processing, air interface resources consumed by the first device for sending, to the first node, the second time-domain channel state information obtained after the first processing may be reduced.

In an implementation, the second time-domain channel state information obtained after the first processing can satisfy a requirement on the precision of the target model for the input information. That is, after the second time-domain channel state information is input into the target model, a result output by the target model can satisfy a requirement on the precision of a corresponding service. For example, it is assumed that the first time-domain channel state information is a CIR, and an AI model is used for estimating the position information of the terminal based on the CIR. In this case, after the CIR obtained after the first processing is input into the AI model, positioning precision of the position information output by the AI model satisfies a positioning service requirement. In this way, air interface resources consumed for CIR transmission may be reduced in a case that positioning precision is satisfied.

In an optional implementation, the method further includes:
The first device receives first indication information from the first node, where the first indication information indicates at least one of the following:

> performing, by the first device, the first processing on the first time-domain channel state information; or
> reporting, by the first device to the first node, related information of the second time-domain channel state information.

In an implementation, the first device performs the first processing based on the first indication information from the first node, for example, whether to perform the first processing, or a manner or a parameter for performing the first processing. For example, the first indication information includes the first parameter related to the first processing.

In an implementation, the first device reports processed related information of the second time-domain channel state information based on the first indication information from the first node, for example, whether to report the related information of the second time-domain channel state information, specific content of the reported related information of the second time-domain channel state information, or a reporting manner of the related information of the second time-domain channel state information.

Certainly, in another implementation, the first device may alternatively determine to perform the first processing on the first time-domain channel state information, or perform the first processing on the first time-domain channel state information specified in a protocol, and report the processed related information of the second time-domain channel state information. This is not specifically limited herein.

In an optional implementation, the first processing includes at least one of the following:

> truncation processing;
> filtering processing;
> normalization processing; or
> quantization processing.

Manner 1

The truncation processing may indicate that a time-domain truncation window is used to truncate one segment or at least two segments from the first time-domain channel state information as the second time-domain channel state information.

In an implementation, parameters related to the truncation processing may include: a start location of a truncation window, and an end location of the truncation window. The second time-domain channel state information includes channel state information corresponding to time-domain samples located between the start location of the truncation window and the end location of the truncation window.

For example, assuming that the first time-domain channel state information includes a CIR of 4096 time-domain samples, and the start location of the truncation window is 0 and the end location of the truncation window is 31, the second time-domain channel state information includes a CIR of the first 32 time-domain samples.

In another implementation, a parameter related to the truncation processing may include a length of a truncation window.

For example, the start location of the truncation window is 0 by default, and the length of the truncation window is 32. Therefore, the second time-domain channel state information includes a CIR of the first 32 time-domain samples.

In still another implementation, a parameter related to the truncation processing may include: a first threshold or a second threshold, where the first threshold is used for selecting a start location of a truncation window, and the second threshold is used for selecting an end location of a truncation window.

For example, the first threshold and the second threshold may be amplitude thresholds. For example, a first sample greater than a first amplitude is used as the start location of the truncation window, and a last sample greater than a second amplitude is used as the end location of the truncation window.

For another example, the first threshold and the second threshold may be ratio thresholds to a maximum amplitude. For example, a first sample with a first ratio greater than the maximum amplitude is used as the start location of the truncation window, and a last sample with a second ratio greater than the maximum amplitude is used as the end location of the truncation window. The maximum amplitude may be an amplitude of a sample with the maximum amplitude in the first time-domain channel state information.

It should be noted that, for a real number, the amplitude may be an absolute value of the real number. For an imaginary number (a + bj), the foregoing amplitude may be $\sqrt{a^2 + b^2}$ .

Optionally, a first parameter related to the truncation processing may include at least one of the following:

a start location of a truncation window;
an end location of a truncation window;
a length of a truncation window;
a first threshold, where the first threshold is used for selecting a start location of a truncation window;
a second threshold, where the second threshold is used for selecting an end location of a truncation window; or
a first offset, where the first offset indicates a relationship between a start location of a truncation window and a reference position.

The first parameter may include a random combination of at least two of the foregoing start location of the truncation window, the end location of the truncation window, the length of the truncation window, the first threshold, and the second threshold; or the first parameter may include a combination of a default parameter and any one of the foregoing start location of the truncation window, the end location of the truncation window, the length of the truncation window, the first threshold, and the second threshold. This is not specifically limited herein.

In this implementation, after the truncation processing, the quantity of time-domain samples included in the second time-domain channel state information is less than the quantity of time-domain samples included in the first time-domain channel state information, so that the data size of the second time-domain channel state information is less than the data size of the first time-domain channel state information.

Manner 2

The filtering processing may be setting a time-domain sample with a small amplitude in the first time-domain channel state information to 0, and reserving a time-domain sample with a large amplitude in the first time-domain channel state information, to obtain the second time-domain channel state information. In this way, in a case of sending the related information of the second time-domain channel state information to the first node, the first device may report only a non-zero element and position information of the non-zero element in the second time-domain channel state information.

In an implementation, the time-domain sample with a small amplitude may indicate a time-domain sample with an amplitude less than a first threshold.

In another implementation, a time-domain sample with a small amplitude may indicate a sample with a ratio of the amplitude to a maximum amplitude less than a second threshold. The maximum amplitude indicates an amplitude of a sample with the maximum amplitude in the first time-domain channel state information.

Optionally, a first parameter related to the filtering processing includes at least one of the following:

a filter parameter, for example, a time-domain filter delay range, a delay center position, and the like;
a first threshold, where the filtering processing includes: setting to 0 a sample, in the first time-domain channel state information, with an amplitude of a time-domain sample less than the first threshold; or
a second threshold, where the filtering processing includes: setting to 0 a sample, in the first time-domain channel state information, with a ratio of an amplitude of a time-domain sample to a maximum amplitude less than the second threshold, where the maximum amplitude is an amplitude of a sample with the maximum amplitude in the first time-domain channel state information.

The first threshold or the second threshold may be configured by a network side or specified in a protocol.

Manner 3

The normalization processing is used for normalizing an amplitude of a time-domain sample in the first time-domain channel state information to be between 0 and 1. For example, an amplitude of a time-domain sample with a minimum amplitude in the first time-domain channel state information is normalized to be 0, and an amplitude of a time-domain sample with a maximum amplitude in the first time-domain channel state information is normalized to be 1. For example, normalization processing may be performed according to the following formula:

$$\tilde{x} = \frac{x - \min(x)}{\max(x) - \min(x)}$$

where x represents the amplitude of the time-domain sample in the first time-domain channel state information; max (x) represents the maximum amplitude, that is, the amplitude of the time-domain sample with the maximum amplitude in the first time-domain channel state information; min (x) represents the minimum amplitude, that is, the amplitude of the time-domain sample with the minimum amplitude in the first time-domain channel state information; and $\tilde{x}$ represents the amplitude of the time-domain sample in normalized second time-domain channel state information.

In this implementation, each time-domain sample in the normalized second time-domain channel state information may be indicated by using fewer bits.

Optionally, the normalization processing includes at least one of the following:

performing normalization processing on the first time-domain channel state information obtained through measurement based on at least two reference signals associated with one TRP;

performing normalization processing on the first time-domain channel state information obtained through measurement based on a reference signal associated with at least two TRPs; or

performing normalization processing on the first time-domain channel state information obtained through measurement based on a reference signal associated with a target TRP and the first time-domain channel state information obtained through measurement based on a reference signal associated with a reference TRP.

In an implementation, in a case that the first device performs measurement on the reference signal associated with the at least two TRPs, to obtain the first time-domain channel state information, the first device may separately perform normalization processing on the first time-domain channel state information of at least two reference signals associated with each TRP. That is, assuming that there are N TRPs, the first device separately performs independent normalization on the first time-domain channel state information associated with the N TRPs. For example, for first time-domain channel state information h of a UE for an $i^{th}$ TRP, the normalized second time-domain channel state information is: h/max (h).

In another implementation, in a case that the first device performs measurement on the reference signal associated with the at least two TRPs, to obtain the first time-domain channel state information, the first device may perform unified normalization processing on the first time-domain channel state information of the reference signal associated with the at least two TRPs. That is, assuming that there are N TRPs, the first device performs unified normalization processing on the first time-domain channel state information associated with the N TRPs. For example, for first time-domain channel state information H = {h1, h2...hT} of a UE for T TRPs, the normalized second time-domain channel state information is: H/max (H).

In still another implementation, the first device may perform normalization processing on the first time-domain channel state information obtained through measurement based on the reference signal associated with the target TRP and the first time-domain channel state information obtained through measurement based on the reference signal associated with the reference TRP. The reference TRP may be a pre-specified TRP or a TRP specified in a protocol.

Optionally, the first time-domain channel state information obtained through measurement based on the reference signal associated with the target TRP may include:

first time-domain channel state information obtained through measurement on a particular reference signal associated with the target TRP; or

first time-domain channel state information obtained through measurement on at least two reference signals associated with the target TRP, and obtained from time-domain channel state information corresponding to a reference signal with the best quality.

Manner 4

The quantization processing is used for performing quantization on data of each time-domain sample in the first time-domain channel state information, so that each quantized time-domain sample may be indicated by using fewer bits. For example, a time-domain sample in the first time-domain channel state information is 1.23456, and after quantization, the time-domain sample is represented as 1.2. In this way, bits used for representing the time-domain sample are reduced.

There may be a plurality of quantization manners for quantization processing, such as linear quantization, dB quantization, differential quantization, and the like.

It should be noted that, in digital signal processing, the quantization manner refers to a method of converting a continuous signal into a discrete digital signal, including linear quantization and dB quantization.

For example, assuming that a quantization range is [a, b], and 8-bit quantization is used, an implementation of linear quantization includes:

a quantization interval is: $d = (b-a)/2^8$;
0 is reported to indicate a value: a;
1 is reported to indicate a value: $a + 1*d$;
j is reported to indicate a value: $a + j*d$; and
$2^8$ is reported to indicate a value: $a + 2^8*d = b$.

In the implementation, $2^8$ represents 2 raised to the power of 8.

For another example, assuming that a quantization range is [a, b], and 8-bit quantization is used, an implementation of dB quantization includes:

first converting [a, b] into dB domain, for example, $dB = 10*log10(x)$, and then performing linear quantization. For example, after conversion to dBm, the range is [e, f]:

a quantization interval is: $d = (f-e)/2^8$;
0 is reported to indicate a value: e;
1 is reported to indicate a value: $e + 1*d$;
j is reported to indicate a value: $e + j*d$; and
$2^8$ is reported to indicate a value: $e + 2^8*d = f$.

Differential quantization indicates that a maximum value is separately quantized, and other values are first converted into differences with the maximum value, and then quantized. For example, a group of vectors is [5 10 8 9], a vector with a maximum value 10 is separately quantized, and other values become differences between the vectors. That is, the vectors are converted into (10, [-5 0 -2 -1]) or ([-5 10 -2 -1]), and then quantized. For a specific quantization process, refer to the foregoing linear quantization or dB quantization process. Details are not described herein again.

Optionally, a first parameter related to the quantization processing includes at least one of the following:

quantization manner information;
quantization precision;
a quantization interval; or
a quantization range.

The quantization manner information indicates a specific quantization manner to be used.

Optionally, the quantization manner may be specified in a protocol.

In an implementation, the quantization manner information may indicate a combination of at least two quantization manners, for example, indicate a combination of at least two of linear quantization, dB quantization, and differential quantization.

The quantization precision indicates precision of a quantized time-domain sample, and is, for example, quantization precision of 8 bits, 16 bits, 32 bits, 64 bits, or any bit. The quantization precision may alternatively be referred to as a bit depth. In digital signal processing, the quantization precision indicates a quantity of bits of a codeword output by a quantizer, that is, a quantity of bits occupied by each sample after discretization.

The quantization interval refers to an amplitude range of each interval in a process of dividing a continuous analog signal into a limited quantity of discrete intervals.

The quantization range refers to an amplitude range of an analog signal that a quantizer can process. The quantizer performs quantization on a continuous analog signal into a discrete digital signal, and an amplitude range of an input signal of the quantizer should not exceed an input range of the quantizer; otherwise, signal distortion or saturation, or another problem may occur. Usually, the input amplitude range of the quantizer is defined as an interval between a largest input signal and a smallest input signal.

In conclusion, there are various manners and parameters for the first processing. In an implementation, that the first device performs the first processing on the first time-domain channel state information may include:

performing, by the first device, the first processing on the first time-domain channel state information based on a first parameter, where the first parameter is a parameter related to the first processing.

In this implementation, a processing manner, a processing process, and the like of the first processing may be clearly indicated based on the first parameter.

It should be noted that, the first processing may include at least two of truncation processing, normalization processing, filtering processing, and quantization processing. In this case, the first parameter may include the parameter of each processing. In addition, the first parameter may be selected by the terminal according to a communication scenario, or indicated by a network side, or specified in a protocol. In a case that the first processing includes at least two of truncation processing, normalization processing, filtering processing, and quantization processing, an order of the first processing may be truncation processing-> normalization processing-> filtering processing-> quantization processing. For example, in a case that the first processing includes truncation processing and quantization processing, the truncation processing is first performed, and then the quantization processing is performed on the first time-domain channel state information obtained after the truncation processing, to obtain the second time-domain channel state information.

In an optional implementation, that the first device performs the first processing on the first time-domain channel state information includes at least one of the following:

performing, by the first device, the same first processing on different pieces of first time-domain channel state information;

performing, by the first device, respectively corresponding first processing on different pieces of first time-domain channel state information;

performing, by the first device based on a first rule, respectively corresponding first processing on first time-domain channel state information associated with different TRPs or reference signals;

performing, by the first device based on second indication information from the first node, respective corresponding first processing on first time-domain channel state information associated with different TRPs or reference signals; or

performing, by the first device based on third indication information from the first node, the same first processing on first time-domain channel state information associated with different TRPs or reference signals.

In an implementation, the first device may distinguish TRPs or reference signals, to perform different first processing on first time-domain channel state information associated with different TRPs or reference signals. For example, N1-bit quantization is performed on time-domain channel state information associated with a TRP with an RSRP greater than a third threshold or a reference signal, and a length of a truncation window is W1; or N2-bit quantization is performed on a time-domain channel impulse response associated with a TRP with an RSRP less than a fourth threshold or a reference signal, and a length of a truncation window is W2.

In this case, the first device may determine a specific type of first processing to be performed on the first time-domain channel state information associated with each TRP or reference signal; or the first device may determine, based on an indication of the first node (the first indication information or the second indication information), a specific type of first processing to be performed on the first time-domain channel state information associated with each TRP or reference signal; or the first device may determine, based on a preset first rule, a specific type of first processing to be performed on the first time-domain channel state information associated with each TRP or reference signal.

In an implementation, performing, by the first device based on the first rule, respectively corresponding first processing on the first time-domain channel state information associated with different TRPs or reference signals includes:

determining, by the first device based on a first association relationship, to perform the first processing on the first time-domain channel state information associated with the target TRP or reference signal, where the first association relationship includes an association relationship between a second parameter of the target TRP or the target reference signal and the first processing, and the second parameter is a received signal parameter of the target TRP or the target reference signal.

The first rule may be a correspondence rule between first processing used by each TRP or reference signal and first time-domain channel state information associated with each TRP or reference signal. For example, a specific type of first processing used by the first time-domain channel state information associated with a specific TRP or reference signal is determined based on the first rule.

The first rule may be determined and reported by the terminal, or specified in a protocol, or indicated by a network side. This is not specifically limited herein.

In another implementation, the first device may not distinguish TRPs or reference signals, to perform the same first processing on first time-domain channel state information associated with different TRPs or reference signals. In this case, the first device may automatically determine that the same first processing is performed on the first time-domain channel state information associated with different TRPs or reference signals, or the first device may determine, based on an indication of the network side (the first indication information or the third indication information), that the same first processing is performed on the first time-domain channel state information associated with different TRPs or reference signals.

It should be noted that, in this embodiment of this application, the first time-domain channel state information associated with the TRP may be understood as that a reference signal is transmitted on resources of a specific TRP. The time-domain channel state information obtained by the first device through measurement on the reference signal is the first time-domain channel state information associated with the TRP. In this embodiment of this application, the first time-domain channel state information associated with the reference signal may be understood as that the time-domain channel state information obtained by the first device through measurement on the reference signal is the first time-domain channel state information associated with the reference signal.

In an implementation, the target TRP may include each of different TRPs. That is, the terminal determines, based on a first association relationship, first processing corresponding to a TRP in one-to-one correspondence, and processes, by using the first processing, the first time-domain channel state information associated with the same TRP.

In another implementation, the target reference signal may include each of different reference signals. That is, the terminal determines, based on a first association relationship, first processing corresponding to a reference signal in one-to-one correspondence, and processes, by using the first processing, the first time-domain channel state information associated with the same reference signal.

Optionally, received signal parameters of the target TRP or the target reference signal may specifically include at least one of the following: a reference signal received power (Reference Signal Received Power, RSRP), reference signal received quality (Reference Signal Received Quality, RSRQ), a signal-to-noise ratio (Signal-to-Noise Ratio, SNR), or a signal to interference plus noise ratio (Signal to Interference plus Noise Ratio, SINR).

Values of the parameters such as the RSRP, the RSRQ, the SNR, and the SINR may reflect communication quality or signal strength between the target TRP and the terminal, or reflect communication quality or signal strength of the target reference signal. For a TRP or a reference signal with high signal strength or good communication quality, associated first time-domain channel state information has higher precision.

In an implementation, first processing with higher precision may be performed for first time-domain channel state information associated with a TRP or a reference signal with high signal strength or good communication quality. In this case, second time-domain channel state information associated with the TRP or the reference signal has higher precision. For example, a longer truncation window or a larger quantization quantity of bits is used for a TRP or a reference signal with good communication quality.

In this implementation, the first processing with higher precision is performed for the TRP or the reference signal with high signal strength or good communication quality, so that a positioning result obtained based on the second time-domain channel state information obtained after the first processing is more accurate.

In another implementation, first processing with lower precision may be performed for first time-domain channel state information associated with a TRP or a reference signal with high signal strength or good communication quality. In this case, a data size of second time-domain channel state information associated with the TRP or the reference signal is smaller. For example, a shorter truncation window or a smaller quantity of quantization bits is used for a TRP or a reference signal with good communication quality.

In this implementation, because precision of the time-domain channel state information corresponding to the TRP or the reference signal with high signal strength or good communication quality is higher, first processing with lower precision is performed for the TRP or the reference signal with high signal strength or good communication quality, so that the second time-domain channel state information obtained after the first processing satisfies a requirement on positioning precision, the data size of the second time-domain channel state information is smaller.

Optionally, at least two of the foregoing implementations may be combined. For example, the base station first sends the third indication information to all UEs connected to the base station, so that all UEs perform the same first processing on the first time-domain channel state information associated with different TRPs or reference signals. Then, the base station may send the second indication information to a specific UE according to an actual requirement, to indicate the UE to adjust, based on an indication of the second indication information, the first processing on the first time-domain channel state information associated with different TRPs or reference signals. For example, in a case that positioning precision of a UE a is lower than the requirement on positioning precision, the base station sends the second indication information to the UE a, to indicate to perform the first processing with higher precision on the first time-domain channel state information associated with the TRP or the reference signal with high signal strength or good communication quality.

In an optional implementation, performing, by the first device, respectively corresponding first processing on different pieces of first time-domain channel state information includes at least one of the following:

performing, by the first device based on a second association relationship, the first processing on target first time-domain channel state information; or

performing, by the first device based on the first indication information from the first node, the first processing on target first time-domain channel state information, where

the second association relationship includes at least one of the following:

an association relationship between the first processing and identifier information of a TRP associated with the target first time-domain channel state information; or

an association relationship between the first processing and identifier information of a reference signal associated with the target first time-domain channel state information.

In this implementation, the identifier information of the TRP or the identifier information of the reference signal may be associated with respective corresponding first processing in advance, so that in a case that first time-domain channel state information associated with a specific TRP or reference signal is obtained, the first time-domain channel state information can be processed by using the first processing associated with the identifier information of the TRP or reference signal.

In an implementation, the method further includes:

sending, by the first device, second information to the first node, where the second information includes a third parameter respectively associated with each TRP or reference signal of the first device, and the third parameter is a received signal parameter of the associated TRP or reference signal; and

receiving, by the first device, second indication information from the first node, where the second indication information indicates the first device to perform the first processing related to a third target parameter on the first time-domain channel state information, the first time-domain channel state information and the third target parameter are associated with the same TRP or reference signal of the first device, and the third parameter includes the third target parameter.

The third parameter may be the same as or different from the second parameter. For example, the third parameter includes at least one of the following: an RSRP, RSRQ, an SNR, or an SINR.

In an implementation, in a case that the first device is associated with a plurality of TRPs or a plurality of reference signals, the first device performs measurement on each TRP or each reference signal, to obtain a plurality of pieces of first time-domain channel state information. In this case, the first time-domain channel state information associated with different TRPs or different reference signals may correspond to different first processing. In this implementation, different TRPs or different reference signals have different third parameters. For a specified TRP or reference signal, the first processing corresponding to the first time-domain channel state information associated with different TRPs or different reference signals may be determined based on an association relationship between the third target parameter corresponding to the TRP or reference signal and the first processing.

For example, assuming that N TRPs correspond to N pieces of first time-domain channel state information, there may be M types of first processing, where N and M are integers greater than 1. In this case, for one piece of first time-domain channel state information, a third target parameter of a TRP corresponding to the first time-domain channel state information may be obtained, and then one type of first processing performed on the first time-domain channel state information is determined from M types of first processing based on an association relationship between the third target parameter and first processing.

In this implementation, the first device detects and reports, to the first node, the third parameter, such as an RSRP, RSRQ, an SNR, or an SINR, associated with each TRP or reference signal. In this way, the first node may determine communication quality or signal strength of each TRP or reference signal based on the parameters, and may further determine the first processing that satisfies a positioning requirement and reduces the data size of the second time-domain channel state information.

In an optional implementation, in a case that the TRP of the first device is associated with at least two reference signal resources, the method further includes:

separately performing, by the first device, measurement on reference signals on the at least two reference signal resources, to obtain at least two pieces of time-domain channel state information, where the at least two pieces of time-domain channel state information is in one-to-one correspondence with the at least two reference signal resources; and

selecting, by the first device based on a second rule, one of the at least two pieces of time-domain channel state information as the first time-domain channel state information.

In an implementation, the at least two reference signal resources associated with the TRP of the terminal may include a reference signal sent by the base station through beam scanning. The terminal receives the reference signal from a beam from each angle, and obtains, through measurement based on the reference signal, time-domain channel state information that is in one-to-one correspondence with the beam from each angle. In this implementation, time-domain channel state information corresponding to only one reference signal resource may be selected as the first time-domain channel state information. In this way, compared with performing first processing on the time-domain channel state information corresponding to all the reference signal resources and reporting the processed second time-domain channel state information, the data size of the second time-domain channel state information obtained after the first processing can be greatly reduced, to further greatly reduce air interface resources consumed for transmission of the second time-domain channel state information.

In an implementation, the second rule may be determined by the first device, or specified in a protocol, or indicated by a network side. This is not specifically limited herein.

In some implementations, the second rule may include at least one of the following:

selecting the time-domain channel state information corresponding to a reference signal resource with a maximum RSRP;

selecting the time-domain channel state information corresponding to a reference signal resource with a maximum SINR;

selecting the time-domain channel state information corresponding to a reference signal resource with maximum RSRQ;

selecting the time-domain channel state information corresponding to a reference signal resource with a maximum SNR; or

selecting the time-domain channel state information corresponding to a reference signal resource with a minimum channel estimation error.

Based on the foregoing second rule, the time-domain channel state information corresponding to a reference signal with high signal strength or good communication quality may be preferentially selected as the first time-domain channel state information. In this way, while the data size of the first time-domain channel state information is reduced, the first time-domain channel state information with higher precision can further be selected, so that the second time-domain channel state information obtained after the first processing is performed on the first time-domain channel state information with higher precision has higher precision, and further, position information or feature information related to the position information that is determined based on the second time-domain channel state information with higher precision has higher precision.

In an optional implementation, the first information includes at least one of the following:

a first information field, where the first information field carries indication information for indicating whether the second time-domain channel state information is a zero vector;

a second information field, where the second information field carries a location of a non-zero element in the second time-domain channel state information; or

a third information field, where the second information field carries values at positions of non-zero elements in the second time-domain channel state information.

In an implementation, a first information field of 1 bit may be used to indicate whether the second time-domain channel state information is the zero vector. For example, "1" indicates that the second time-domain channel state information is not the zero vector, and "0" indicates that the second time-domain channel state information is the zero vector.

The zero vector in this embodiment of this application may be understood as: amplitudes of elements of vectors of the second time-domain channel state information obtained after the first processing are all 0 or are all less than a threshold.

For example, it is assumed that the first processing includes filtering processing, and the filtering processing includes: setting to 0 a sample, in the first time-domain channel state information, with an amplitude of a time-domain sample less than a first threshold, or setting to 0 a sample, in the first time-domain channel state information, with a ratio of an amplitude of a time-domain sample to a maximum amplitude less than a second threshold. In this case, in a case that the amplitudes of all elements of the vectors of the second time-domain channel state information is less than the first threshold or the second threshold, the second time-domain channel state information is the zero vector.

In an implementation, a quantity of bits in the second information field may be positively correlated to a length of a truncation window. That is, a longer truncation window indicates more bits in the second information field.

For example, assuming that the length of the truncation window is 32 time-domain samples, a quantity of bits required to report at a location of a non-zero element is: $\lceil \log_2 32 \rceil = 5$.

In an implementation, a quantity of bits in the third information field is respectively in positive correlation with quantization precision and a quantity of non-zero elements. That is, higher quantization precision indicates more bits in the third information field; and a larger quantity of non-zero elements indicates more bits in the third information field.

For example, assuming that the quantization precision is 8 bits, the first time-domain channel state information is a CIR, and the quantity of non-zero elements in the CIR is N, there are 8*N*2 reported bits, where 2 is reported by using a real part and an imaginary part.

For another example, assuming that the quantization precision is 8 bits, the first time-domain channel state information is a PDP, and the quantity of non-zero elements in the PDP is N, there are 8*N* 1 reported bits.

In an embodiment, for first processing and reporting of the PDP, the first processing is that it is assumed that the first 32 time-domain samples are truncated, and reported content is as follows:

> (1) 1 bit indicates whether the PDP is a zero vector.
> (2) In a case that the vector is not a zero vector, for each non-zero element, a location of the non-zero element is indicated by using 5 bits (0 to 31).
> (3) In a case that the vector is not a zero vector, and the quantity of quantization bits is 8, each non-zero element is quantized by using 8 bits.

In this case, a quantity of bits reported by the PDP is:

$$\text{Bits} = 1 + 5*\text{length } (H \neq 0) + 8*\text{length}(H \neq 0),$$

where
length $(H \neq 0)$ indicates a quantity of non-zero elements in H.

In another embodiment, for first processing and reporting of the CIR, the first processing is that it is assumed that the first 32 time-domain samples are truncated, and reported content is similar to that of a PDP. However, each non-zero element has a real part and an imaginary part, requiring to be separately reported. In this case, a quantity of bits reported by the CIR is:

$$\text{Bits} = 1 + 5*\text{length } (H \neq 0) + 2*8*\text{length}(H \neq 0)$$

In an optional implementation, the first information further includes at least one of the following:

> a TRP identifier associated with the second time-domain channel state information;
> a cell identifier associated with the second time-domain channel state information;
> a port identifier associated with the second time-domain channel state information;
> a reference signal identifier associated with the second time-domain channel state information;
> an identifier of a target model associated with the second time-domain channel state information, where the target model is used for inputting the second time-domain channel state information, to obtain at least one of position information of a terminal and feature information related to the position information;
> a function identifier of a target model associated with the second time-domain channel state information; or
> a reference signal resource identifier associated with the second time-domain channel state information.

In an implementation, the TRP identifier associated with the second time-domain channel state information may indicate: first time-domain channel state information that corresponds to the second time-domain channel state information before the first processing is time-domain channel state information between a TRP corresponding to the TRP identifier and the first device. Based on the TRP identifier, different first processing may be performed on the time-domain channel state information associated with different TRPs.

In an implementation, the cell identifier associated with the second time-domain channel state information may indicate: first time-domain channel state information that corresponds to the second time-domain channel state information before the first processing is time-domain channel state information between a cell corresponding to the cell identifier and the first device. Based on the cell identifier, different first processing may be performed on the time-domain channel state information associated with different cells.

In an implementation, the port identifier associated with the second time-domain channel state information may indicate: first time-domain channel state information that corresponds to the second time-domain channel state information before the first processing is time-domain channel state information corresponding to a reference signal sending port or a reference signal receiving port corresponding to the port identifier. Based on the port identifier, different first processing may be performed on the time-domain channel state information associated with different ports.

In an implementation, the reference signal identifier associated with the second time-domain channel state information may indicate: first time-domain channel state information that corresponds to the second time-domain channel state information before the first processing is time-domain channel state information obtained through measurement on a reference signal corresponding to the reference signal identifier. Based on the reference signal identifier, different first processing may be performed on the time-domain channel state information obtained through measurement based on different reference signals.

In an implementation, the identifier of the target model associated with the second time-domain channel state information may indicate that the second time-domain channel state information is used for inputting the second time-domain channel state information into a target model corresponding to an identifier pair of the target model. Based on the identifier of the target model, the second time-domain channel state information used for being input into different models may be obtained through different first processing.

In an implementation, the function identifier of the target model associated with the second time-domain channel state information may indicate that the second time-domain channel state information is used for being input into a target model with a function corresponding to the function identifier. Based on the function identifier of the target model, the second time-domain channel state information used for being input into different function models may be obtained through different first processing.

In an implementation, the reference signal resource identifier associated with the second time-domain channel state information may indicate: first time-domain channel state information that corresponds to the second time-domain channel state information before the first processing is time-domain channel state information obtained through measurement on a reference signal transmitted on a reference signal resource corresponding to the reference signal resource identifier. Based on the reference signal resource identifier, different first processing may be performed on the time-domain channel state information obtained through measurement based on reference signals transmitted on different resources.

In embodiments of this application, the first device performs the first processing on the first time-domain channel state information, to obtain the second time-domain channel state information, where the data size of the first time-domain channel state information is greater than the data size of the second time-domain channel state information; and the first device sends the first information to the first node, where the first information is the related information of the second time-domain channel state information. The first device performs the first processing on the first time-domain channel state information that needs to be reported, to obtain the second time-domain channel state information with a smaller data size, and then reports the related information of the second time-domain channel state information to the first node. In this way, air interface resources consumed by reporting the related information of the second time-domain channel state information can be reduced.

Refer to FIG. 4. The signal processing method according to this embodiment of this application may be performed by a first node. The first node may be a network-side device or a server. The network-side device may be the network-side device 12 of various types listed in FIG. 1, or a network-side device other than the network-side device of the types listed in this embodiment shown in FIG. 1. For ease of description, in this embodiment of this application, an example in which the first node is a base station is usually used for description. This is not specifically limited herein. As shown in FIG. 4, the information processing method may include the following steps.

Step 401: A first node receives first information from a first device, where the first information includes related information of second time-domain channel state information obtained through first processing, a data size of the second time-domain channel state information is less than a data size of first time-domain channel state information, and the first time-domain channel state information is time-domain channel state information before the first processing.

Step 402: The first node determines, based on the first information, target time-domain channel state information.

Step 403: The first node inputs the target time-domain channel state information into a target model, and obtains at least one of the following outputs of the target model:

position information of a terminal, where the terminal is related to the first device; or
feature information related to position information of the terminal.

In an implementation, in a case that the first device is a terminal, the target model is used for outputting the position information of the terminal, or outputting the feature information related to the position information of the terminal.

In an implementation, in a case that the first device is a network-side device, for example, a base station, the target model is used for outputting the position information of the terminal that sends a reference signal, or outputting the feature information related to the position information of the terminal that sends a reference signal. The network-side device is configured to measure the reference signal sent by the terminal, to obtain the first time-domain channel state information.

In an implementation, the target time-domain channel state information may be second time-domain channel state information, or information obtained after the second time-domain channel state information is further processed. For ease of description, in this embodiment of this application, an example in which the target time-domain channel state information is second time-domain channel state information is used for description. This is not specifically limited herein.

It should be noted that, meanings and functions of the first information, the first processing, the first time-domain channel state information, and the second time-domain channel state information are the same as the meanings and functions of the first information, the first processing, the first time-domain channel state information, and the second time-domain channel state information in the method embodiment shown in FIG. 2. For details, refer to corresponding descriptions in the method embodiment shown in FIG. 2. Details are not described herein again.

In this embodiment of this application, the first node receives the first information from the first device, and obtains, based on the first information, the target time-domain channel state information used for being input into the target model, to obtain the position information of the terminal output by the target model, or the feature information related to the position information of the terminal.

Meanings and functions of the target model, the position information of the terminal, and the feature information related to the position information of the terminal are the same as the meanings and functions of the target model, the position information of the terminal, and the feature information related to the position information of the terminal in the method embodiment shown in FIG. 2. Details are not described herein again.

Optionally, the method further includes:

sending, by the first node, first indication information to the first device, where the first indication information indicates at least one of the following:

> performing, by the first device, the first processing on the first time-domain channel state information; or
> reporting, by the first device to the first node, related information of the second time-domain channel state information.

In this implementation, the first node indicates the first device to perform the first processing, for example, whether to perform the first processing, or a manner or a parameter for performing the first processing. The first node indicates, to the first device, to report related information of the second time-domain channel state information obtained after the first processing, for example, whether to report the related information of the second time-domain channel state information, specific content of the reported related information of the second time-domain channel state information, or a reporting manner of the related information of the second time-domain channel state information.

Optionally, the first processing includes at least one of the following:

> truncation processing;
> filtering processing;
> normalization processing; or
> quantization processing.

For meanings and processes of the foregoing truncation processing, filtering processing, normalization processing, and quantization processing, refer to explanations and descriptions in the method embodiment shown in FIG. 2. Details are not described herein again.

Optionally, the method further includes:

sending, by the first node, third indication information to the first device, where the third indication information indicates to perform the same first processing on first time-domain channel state information associated with different TRPs or reference signals.

In this implementation, the first node indicates the first device to separately perform the same first processing on the first time-domain channel state information associated with each TRP.

Optionally, the method further includes:

> receiving, by the first node, second information from the first device, where the second information includes a third parameter respectively associated with each TRP or reference signal of the first device, and the third parameter is a received signal parameter of the associated TRP or reference signal;
> determining, by the first node based on a third target parameter, to perform the first processing on the first time-domain channel state information, where the first time-domain channel state information and the third target parameter are associated with the same TRP or reference signal of the first device, and the third parameter includes the third target parameter; and
> sending, by the first node based on the second information, second indication information to the first device, where the second indication information indicates the first device to perform respectively corresponding first processing on time-domain channel state information associated with different TRPs or reference signals.

In this implementation, the first device reports, to the first node, the third parameter respectively associated with each TRP or reference signal of the first device, so that the first node determines, based on the third parameter respectively associated with the TRP or reference signal, the first processing corresponding to the TRP; and indicates, by using the second indication information, the first device to perform the first processing respectively corresponding to time-domain channel state information associated with different TRPs. The first processing corresponding to a TRP or reference signal indicates: performing, on the first time-domain channel state information associated with a specific TRP or reference signal, the first processing corresponding to the TRP or the reference signal.

Optionally, the third parameter includes at least one of the following: an RSRP, RSRQ, an SNR, or an SINR.

Optionally, the first information includes at least one of the following:

a first information field, where the first information field carries indication information for indicating whether the second time-domain channel state information is a zero vector;

a second information field, where the second information field carries a location of a non-zero element in the second time-domain channel state information; or

a third information field, where the second information field carries values at positions of non-zero elements in the second time-domain channel state information.

Optionally, the first information further includes at least one of the following:

a TRP identifier associated with the second time-domain channel state information;

a cell identifier associated with the second time-domain channel state information;

a port identifier associated with the second time-domain channel state information;

a reference signal identifier associated with the second time-domain channel state information;

an identifier of a target model associated with the second time-domain channel state information;

a function identifier of a target model associated with the second time-domain channel state information; or

a reference signal resource identifier associated with the second time-domain channel state information.

In this embodiment of this application, the first node can receive, from the first device, the related information of the second time-domain channel state information obtained after the data size is reduced, and obtain, based on the related information, the target time-domain channel state information. The target time-domain channel state information is input into the target model, to obtain the position information of the terminal or the feature information used for calculating the position information of the terminal. In this way, the terminal can be positioned, and air interface resources for the transmission of the time-domain channel state information can be reduced.

For ease of understanding, an information transmission method and an information processing method provided in embodiments of this application are described by using an example of the following embodiments.

Example 1:

In an indoor factory positioning scenario primarily using a non line of sight (Non Line of Sight, NLOS) radius in a frequency band 1 (FR1), an example in which the data size of the time-domain channel state information is reduced through truncation processing is used, an accumulated probability density of positioning precision under various lengths of the truncation window and truncation positions is shown in Table 1.

Table 1

| Frequency band | Scenario | Truncation position | 50% | 67% | 80% | 90% |
|---|---|---|---|---|---|---|
| FR1 | NLOS radius-based indoor factory | 1-30 | 0.34 | 0.49 | 0.72 | 1.04 |
| | | 1-100 | 0.34 | 0.49 | 0.72 | 1.04 |
| | | 10-30 | 0.34 | 0.49 | 0.72 | 1.06 |
| | | 30-100 | 0.99 | 1.42 | 1.96 | 2.99 |

In the Table, 50%, 67%, 80%, and 90% represent the accumulated probability density of positioning precision. For example, in a case that 1 to 30 time-domain samples are included at a truncation position, a probability that positioning precision corresponding to the method is less than 0.34 is 50%.

It can be learned from the foregoing Table 1 that, positioning precision remains unchanged in a case of truncating first 30 time-domain samples or truncating first 100 time-domain samples. However, reporting overheads of the CIR with the first truncated 30 time-domain samples are reduced. In addition, different positions at which the CIR is truncated have an impact on positioning precision.

It can be learned from Table 1 that, to reduce a data size as much as possible while ensuring that the truncated CIR satisfies positioning precision, the CIR with the first truncated 30 time-domain samples is used as the reported CIR.

Example 2:

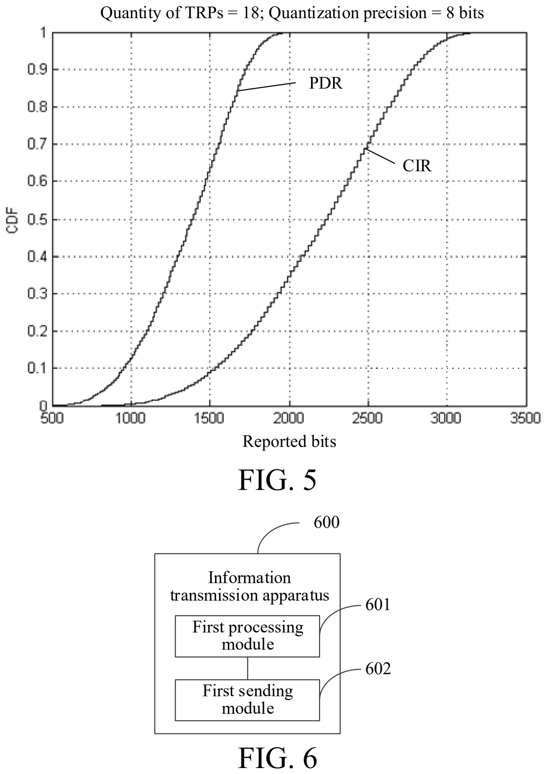

For an indoor scenario with a length of 120 m and a width of 60 m, it is assumed that there are 18 TRPs in total, and several users are sampled through simulation. After first processing in this embodiment of this application is performed, distribution of bits of the second time-domain channel state information reported by a terminal is shown in FIG. 6.
It can be learned from a distribution curve of the bits of the second time-domain channel state information shown in FIG. 5 that, for the PDP, a probability that the quantity of bits of the second time-domain channel state information is less than 1500 is approximately 60%; or for the CIR, a probability that the quantity of bits of the second time-domain channel state information is less than 1500 is approximately 10%. It can be learned that, the quantity of bits of the reported CIR and PDP can be reduced by using the information processing method in this embodiment of this application.
The information transmission method according to embodiments of this application may be performed by an information transmission apparatus. In embodiments of this application, the information transmission apparatus provided in embodiments of this application is described by using an example in which the information transmission apparatus performs the information transmission method.
Refer to FIG. 6. An information transmission apparatus 600 provided in an embodiment of this application may be an apparatus in a first device, and the first device may be a terminal or an access network device.
As shown in FIG. 6, the information transmission apparatus 600 may include the following modules:

a first processing module 601, configured to perform first processing on first time-domain channel state information, to obtain second time-domain channel state information, where a data size of the first time-domain channel state information is greater than a data size of the second time-domain channel state information; and
a first sending module 602, configured to send first information to a first node, where the first information is related information of the second time-domain channel state information, and the first time-domain channel state information is time-domain channel state information obtained by the first device through measurement based on a reference signal.

Optionally, the first time-domain channel state information includes at least one of the following:

time-domain channel state information obtained through measurement based on at least one reference signal associated with the same transmission reception point TRP; or
time-domain channel state information obtained through measurement based on a reference signal associated with at least one TRP.

Optionally, the information transmission apparatus 600 further includes:

a second receiving module, configured to receive first indication information from the first node, where the first indication information indicates at least one of the following:
the first processing module 601 performs the first processing on the first time-domain channel state information; or
the first sending module 602 reports related information of the second time-domain channel state information to the first node.

Optionally, in a case that the first processing module 601 performs the first processing on the first time-domain channel state information based on a first parameter, the first indication information includes the first parameter.
Optionally, the related information of the second time-domain channel state information is used for obtaining at least one of the following:

position information of a terminal, where the terminal is related to the first device; or
feature information related to the position information.

Optionally, the position information of the terminal includes at least one of the following:

absolute position information of the terminal; or
relative position information of the terminal.

Optionally, the feature information related to the position information includes at least one of the following of a line of sight LOS radius:

time of arrival TOA;
an angle of arrival AOA;
an angle of departure AOD; or
a reference signal time difference RSTD.

Optionally, the first processing includes at least one of the following:

truncation processing;
filtering processing;
normalization processing; or
quantization processing.

Optionally, the first processing module 601 is specifically configured to:
perform the first processing on the first time-domain channel state information based on a first parameter, where the first parameter is a parameter related to the first processing.
Optionally, in a case that the first processing includes the truncation processing, the first parameter includes at least one of the following:

a start location of a truncation window;
an end location of a truncation window;
a length of a truncation window;
a first threshold, where the first threshold is used for selecting a start location of a truncation window;
a second threshold, where the second threshold is used for selecting an end location of a truncation window; or
a first offset, where the first offset indicates a relationship between a start location of a truncation window and a reference position.

Optionally, in a case that the first processing includes the filtering processing, the first parameter includes at least one of the following:

a filter parameter;
a first threshold, where the filtering processing includes: setting to 0 a sample, in the first time-domain channel state information, with an amplitude of a time-domain sample less than the first threshold; or
a second threshold, where the filtering processing includes: setting to 0 a sample, in the first time-domain channel state information, with a ratio of an amplitude of a time-domain sample to a maximum amplitude less than the second threshold, where the maximum amplitude is an amplitude of a sample with the maximum amplitude in the first time-domain channel state information.

Optionally, the normalization processing is used for normalizing the amplitude of the time-domain sample in the first time-domain channel state information to be between 0 and 1.
Optionally, the normalization processing includes at least one of the following:

performing normalization processing on the first time-domain channel state information obtained through measurement based on at least two reference signals associated with one TRP;
performing normalization processing on the first time-domain channel state information obtained through measurement based on a reference signal associated with at least two TRPs; or
performing normalization processing on the first time-domain channel state information obtained through measurement based on a reference signal associated with a target TRP and the first time-domain channel state information obtained through measurement based on a reference signal associated with a reference TRP.

Optionally, in a case that the first processing includes the quantization processing, the first parameter includes at least one of the following:

quantization manner information;
quantization precision;
a quantization interval; or
a quantization range.

Optionally, in a case that there are at least two reference signals or TRPs associated with the first time-domain channel state information, the first processing module 601 is specifically configured to perform at least one of the following:

perform the same first processing on different pieces of first time-domain channel state information;
perform respectively corresponding first processing on different pieces of first time-domain channel state information;
perform, based on a first rule, respectively corresponding first processing on first time-domain channel state information associated with different TRPs or reference signals;
perform, based on second indication information from the first node, respective corresponding first processing on first time-domain channel state information associated with different TRPs or reference signals; or
perform, based on third indication information from the first node, the same first processing on first time-domain channel state information associated with different TRPs or reference signals.

Optionally, the first processing module 601 is specifically configured to:

determine, based on a first association relationship, to perform the first processing on the first time-domain channel state information associated with the target TRP or reference signal, where
the first association relationship includes an association relationship between a second parameter of the target TRP or the target reference signal and the first processing, and the second parameter is a received signal parameter of the target TRP or the target reference signal.

Optionally, the first processing module 601 is specifically configured to perform at least one of the following:

perform, based on a second association relationship, the first processing on target first time-domain channel state information; or
perform, based on the first indication information from the first node, the first processing on target first time-domain channel state information, where
the second association relationship includes at least one of the following:

an association relationship between the first processing and identifier information of a TRP associated with the target first time-domain channel state information; or
an association relationship between the first processing and identifier information of a reference signal associated with the target first time-domain channel state information.

Optionally, the second parameter includes at least one of the following: a reference signal received power RSRP, reference signal received quality RSRQ, a signal-to-noise ratio SNR, or a signal-to-interference-plus-noise ratio SINR.
Optionally, the information transmission apparatus 600 further includes:

a second sending module, configured to send second information to the first node, where the second information includes a third parameter respectively associated with each TRP or reference signal of the first device, and the third parameter is a received signal parameter of the associated TRP or reference signal; and
a third receiving module, configured to receive second indication information from the first node, where the second indication information indicates the first device to perform the first processing related to a third target parameter on the first time-domain channel state information, the first time-domain channel state information and the third target parameter are associated with the same TRP or reference signal of the first device, and the third parameter includes the third target parameter.

Optionally, the third parameter includes at least one of the following: an RSRP, RSRQ, an SNR, or an SINR.
Optionally, in a case that the TRP of the first device is associated with at least two reference signal resources, the information transmission apparatus 600 further includes:

a measurement module, configured to separately perform measurement on reference signals on the at least two reference signal resources, to obtain at least two pieces of time-domain channel state information, where the at least two pieces of time-domain channel state information is in one-to-one correspondence with the at least two reference signal resources; and
a selection module, configured to select, based on a second rule, one of the at least two pieces of time-domain channel state information as the first time-domain channel state information.

Optionally, the second rule includes at least one of the following:

selecting the time-domain channel state information corresponding to a reference signal resource with a maximum RSRP;

selecting the time-domain channel state information corresponding to a reference signal resource with a maximum SINR;

selecting the time-domain channel state information corresponding to a reference signal resource with maximum RSRQ;

selecting the time-domain channel state information corresponding to a reference signal resource with a maximum SNR; or

selecting the time-domain channel state information corresponding to a reference signal resource with a minimum channel estimation error.

Optionally, the first information includes at least one of the following:

a first information field, where the first information field carries indication information for indicating whether the second time-domain channel state information is a zero vector;

a second information field, where the second information field carries a location of a non-zero element in the second time-domain channel state information; or

a third information field, where the second information field carries values at positions of non-zero elements in the second time-domain channel state information.

Optionally, the first information further includes at least one of the following:

a TRP identifier associated with the second time-domain channel state information;

a cell identifier associated with the second time-domain channel state information;

a port identifier associated with the second time-domain channel state information;

a reference signal identifier associated with the second time-domain channel state information;

an identifier of a target model associated with the second time-domain channel state information, where the target model is used for inputting the second time-domain channel state information, to obtain at least one of position information of a terminal and feature information related to the position information;

a function identifier of a target model associated with the second time-domain channel state information; or

a reference signal resource identifier associated with the second time-domain channel state information.

The information transmission apparatus 600 in embodiments of this application may be an electronic device, for example, an electronic device with an operating system, or may be a component in an electronic device, for example, an integrated circuit or a chip. The electronic device may be a terminal or a network-side device. For example, the terminal may include, but is not limited to, the type of the terminal 11 listed above, and the network-side device may include, but is not limited to, the type of the access network device listed above. This is not specifically limited in embodiments of this application.

The information transmission apparatus 600 according to embodiments of this application may implement all processes implemented in the method embodiment shown in FIG. 2, and the same technical effects are achieved. Details are not described herein again to avoid repetition.

The information processing method according to embodiments of this application may be performed by an information processing apparatus. In embodiments of this application, the information processing apparatus according to embodiments of this application is described by using an example in which the information processing apparatus performs the information processing method.

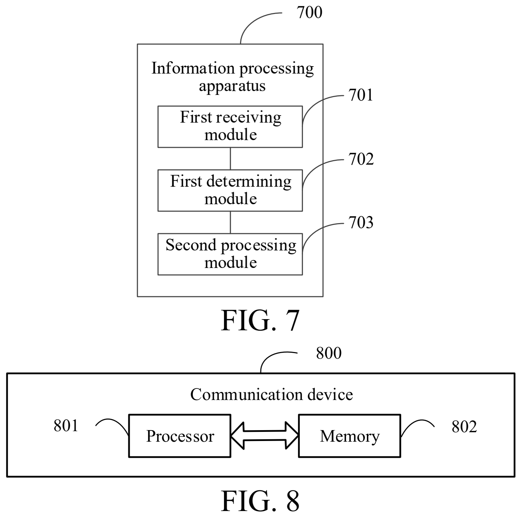

Refer to FIG. 7. An information processing apparatus 700 provided in an embodiment of this application may be an apparatus in a first node, and the first node may be a network-side device or another device other than the network-side device, for example, a server.

As shown in FIG. 7, the information processing apparatus 700 may include the following modules:

a first receiving module 701, configured to receive first information from a first device, where the first information includes related information of second time-domain channel state information obtained through first processing, a data size of the second time-domain channel state information is less than a data size of first time-domain channel state information, and the first time-domain channel state information is time-domain channel state information before the first processing;

a first determining module 702, configured to determine target time-domain channel state information based on the first information; and

a second processing module 703, configured to input the target time-domain channel state information into a target model, and obtain at least one of the following outputs of the target model:

> position information of a terminal, where the terminal is related to the first device; or
> feature information related to position information of the terminal.

Optionally, the information processing apparatus 700 further includes:
a third sending module, configured to send first indication information to the first device, where the first indication information indicates at least one of the following:

> performing, by the first device, the first processing on the first time-domain channel state information; or
> reporting, by the first device to the first node, related information of the second time-domain channel state information.

Optionally, the first processing includes at least one of the following:

> truncation processing;
> filtering processing;
> normalization processing; or
> quantization processing.

Optionally, the information processing apparatus 700 further includes:
a fourth sending module, configured to send third indication information to the first device, where the third indication information indicates to perform the same first processing on first time-domain channel state information associated with different TRPs or reference signals.

Optionally, the information processing apparatus 700 further includes:

> a fourth receiving module, configured to receive second information from the first device, where the second information includes a third parameter respectively associated with each TRP or reference signal of the first device, and the third parameter is a received signal parameter of the associated TRP or reference signal;
> a second determining module, configured to determine, by the first node based on a third target parameter, to perform the first processing on the first time-domain channel state information, where the first time-domain channel state information and the third target parameter are associated with the same TRP or reference signal of the first device, and the third parameter includes the third target parameter; and
> a fifth sending module, configured to send, based on the second information, second indication information to the first device, where the second indication information indicates the first device to perform respectively corresponding first processing on time-domain channel state information associated with different TRPs or reference signals.

Optionally, the third parameter includes at least one of the following: an RSRP, RSRQ, an SNR, or an SINR.

Optionally, the first information includes at least one of the following:

> a first information field, where the first information field carries indication information for indicating whether the second time-domain channel state information is a zero vector;
> a second information field, where the second information field carries a location of a non-zero element in the second time-domain channel state information; or
> a third information field, where the second information field carries values at positions of non-zero elements in the second time-domain channel state information.

Optionally, the first information further includes at least one of the following:

> a TRP identifier associated with the second time-domain channel state information;
> a cell identifier associated with the second time-domain channel state information;
> a port identifier associated with the second time-domain channel state information;
> a reference signal identifier associated with the second time-domain channel state information;
> an identifier of a target model associated with the second time-domain channel state information;
> a function identifier of a target model associated with the second time-domain channel state information; or
> a reference signal resource identifier associated with the second time-domain channel state information.

The information processing apparatus 700 according to embodiments of this application may implement all processes implemented in the method embodiment shown in FIG. 4, and the same technical effects are achieved. Details are not described herein again to avoid repetition.

As shown in FIG. 8, an embodiment of this application further provides a communication device 800, including a processor 801 and a memory 802. The memory 802 stores a program and instructions that can be run on the processor 801. For example, in a case that the communication device 800 is a terminal, and when the program or the instructions are executed by the processor 801, all steps of the information transmission method in embodiments are implemented, and the same technical effects can be achieved. In a case that the communication device 800 is a network-side device, and when the program or the instructions are executed by the processor 801, all steps of the information processing method or the information transmission method in embodiments are implemented, and the same technical effects can be achieved. Details are not described herein again to avoid repetition.

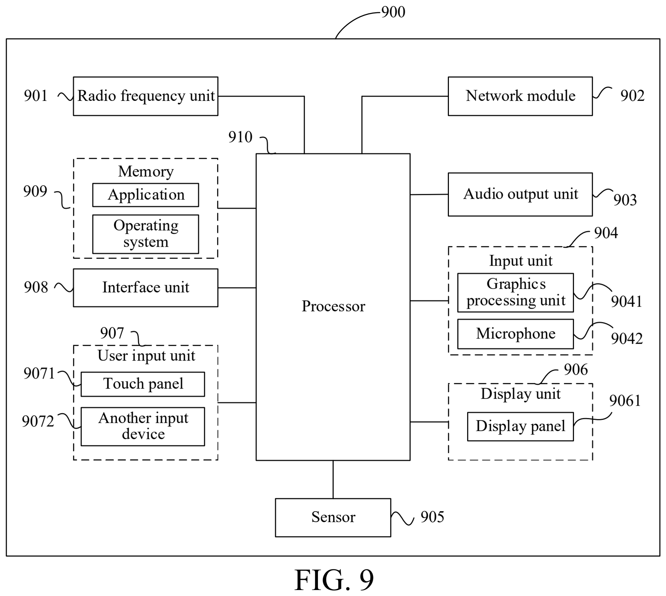

An embodiment of this application further provides a terminal, including a processor and a communication interface. The communication interface is coupled to the processor, and the processor is configured to run a program or instructions, to implement steps of the method embodiment shown in FIG. 2. The terminal embodiment corresponds to the foregoing terminal-side method embodiment, and each implementation process and implementation of the foregoing method embodiment may be used in the terminal embodiment, and the same technical effects can be achieved. In some implementations, FIG. 9 is a diagram of a hardware structure of a terminal according to an embodiment of this application.

The terminal 900 includes, but is not limited to, at least some of components of a radio frequency unit 901, a network module 902, an audio output unit 903, an input unit 904, a sensor 905, a display unit 906, a user input unit 907, an interface unit 908, a memory 909, a processor 910, and the like.

A person skilled in the art may understand that, the terminal 900 may further include a power supply (for example, a battery) for supplying power to the components. The power supply may be logically connected to the processor 910 by using a power management system, to implement functions such as charging, discharging, and power consumption management by using the power management system. The structure of the terminal shown in FIG. 9 constitutes no limitation on the terminal. The terminal may include more or fewer components than those shown in the figure, or combine some components, or have different component arrangements. Details are not described herein again.

It should be understood that, in this embodiment of this application, the input unit 904 may include a graphics processing unit (Graphics Processing Unit, GPU) 9041 and a microphone 9042. The graphics processing unit 9041 performs processing on image data of a static image or a video that is obtained by an image capture apparatus (for example, a camera) in a video capture mode or an image capture mode. The display unit 906 may include a display panel 9061, and the display panel 9061 may be configured in a form of a liquid crystal display, an organic light-emitting diode, or the like. The user input unit 907 includes at least one of a touch panel 9071 and another input device 9072. The touch panel 9071 is alternatively referred to as a touchscreen. The touch panel 9071 may include two parts: a touch detection apparatus and a touch controller. The another input device 9072 may include, but is not limited to, a physical keyboard, a function button (for example, a volume control button, a power button, or the like), a trackball, a mouse, and a joystick. Details are not described herein again.

In this embodiment of this application, the radio frequency unit 901 receives downlink data from a network-side device and then transmits the data to the processor 910 for processing. In addition, the radio frequency unit 901 may send uplink data to the network-side device. Generally, the radio frequency unit 901 includes, but is not limited to, an antenna, an amplifier, a transceiver, a coupler, a low noise amplifier, a duplexer, and the like.

The memory 909 may be configured to store a software program or instructions and various data. The memory 909 may mainly include a first storage area for storing the program and the instructions and a second storage area for storing the data. The first storage area may store an operating system, an application or instructions required by at least one function (for example, a sound playback function, an image display function, and the like), and the like. In addition, the memory 909 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 909 in this embodiment of this application includes, but is not limited to, these memories and any memory of another proper type.

The processor 910 may include one or more processing units. Optionally, the processor 910 integrates an application processor and a modem processor. The application processor mainly processes operations involving an operating system, a user interface, an application, and the like. The modem processor mainly processes a wireless communication signal, and is, for example, a baseband processor. It may be understood that, the modem processor may not be integrated into the processor 910.

The processor 910 is configured to perform first processing on first time-domain channel state information, to obtain second time-domain channel state information, where a data size of the first time-domain channel state information is greater than a data size of the second time-domain channel state information; and

the radio frequency unit 901 is configured to send first information to a first node, where the first information is related information of the second time-domain channel state information, where
the first time-domain channel state information is time-domain channel state information obtained by the first device through measurement based on a reference signal.

Optionally, the first time-domain channel state information includes at least one of the following:

time-domain channel state information obtained through measurement based on at least one reference signal associated with the same transmission reception point TRP; or
time-domain channel state information obtained through measurement based on a reference signal associated with at least one TRP.

Optionally, the radio frequency unit 901 is further configured to receive first indication information from the first node, where the first indication information indicates at least one of the following:

performing, by the terminal, the first processing on the first time-domain channel state information; or
reporting, by the terminal to the first node, related information of the second time-domain channel state information.

Optionally, in a case that the first device performs the first processing on the first time-domain channel state information based on a first parameter, the first indication information includes the first parameter.

Optionally, the related information of the second time-domain channel state information is used for obtaining at least one of the following:

position information of the terminal; or
feature information related to the position information.

Optionally, the position information of the terminal includes at least one of the following:

absolute position information of the terminal; or
relative position information of the terminal.

Optionally, the feature information related to the position information includes at least one of the following of a line of sight LOS radius:

time of arrival TOA;
an angle of arrival AOA;
an angle of departure AOD; or
a reference signal time difference RSTD.

Optionally, the first processing includes at least one of the following:

truncation processing;
filtering processing;
normalization processing; or
quantization processing.

Optionally, that the processor 910 performs the first processing on the first time-domain channel state information includes:
perform the first processing on the first time-domain channel state information based on a first parameter, where the first parameter is a parameter related to the first processing.

Optionally, in a case that the first processing includes the truncation processing, the first parameter includes at least one of the following:

a start location of a truncation window;

an end location of a truncation window;

a length of a truncation window;

a first threshold, where the first threshold is used for selecting a start location of a truncation window;

a second threshold, where the second threshold is used for selecting an end location of a truncation window; or

a first offset, where the first offset indicates a relationship between a start location of a truncation window and a reference position.

Optionally, in a case that the first processing includes the filtering processing, the first parameter includes at least one of the following:

a filter parameter;

a first threshold, where the filtering processing includes: setting to 0 a sample, in the first time-domain channel state information, with an amplitude of a time-domain sample less than the first threshold; or

a second threshold, where the filtering processing includes: setting to 0 a sample, in the first time-domain channel state information, with a ratio of an amplitude of a time-domain sample to a maximum amplitude less than the second threshold, where the maximum amplitude is an amplitude of a sample with the maximum amplitude in the first time-domain channel state information.

Optionally, the normalization processing is used for normalizing the amplitude of the time-domain sample in the first time-domain channel state information to be between 0 and 1.

Optionally, the normalization processing includes at least one of the following:

performing normalization processing on the first time-domain channel state information obtained through measurement based on at least two reference signals associated with one TRP;

performing normalization processing on the first time-domain channel state information obtained through measurement based on a reference signal associated with at least two TRPs; or

performing normalization processing on the first time-domain channel state information obtained through measurement based on a reference signal associated with a target TRP and the first time-domain channel state information obtained through measurement based on a reference signal associated with a reference TRP.

Optionally, in a case that the first processing includes the quantization processing, the first parameter includes at least one of the following:

quantization manner information;

quantization precision;

a quantization interval; or

a quantization range.

Optionally, in a case that there are at least two reference signals or TRPs associated with the first time-domain channel state information, that the processor 910 performs the first processing on the first time-domain channel state information includes at least one of the following:

perform the same first processing on different pieces of first time-domain channel state information;

perform respectively corresponding first processing on different pieces of first time-domain channel state information;

perform, based on a first rule, respectively corresponding first processing on first time-domain channel state information associated with different TRPs or reference signals;

perform, based on second indication information from the first node, respective corresponding first processing on first time-domain channel state information associated with different TRPs or reference signals; or

perform, based on third indication information from the first node, the same first processing on first time-domain channel state information associated with different TRPs or reference signals.

Optionally, that the processor 910 performs, based on a first rule, respectively corresponding first processing on the first time-domain channel state information associated with different TRPs or reference signals includes:

determine, based on a first association relationship, to perform the first processing on the first time-domain channel state information associated with the target TRP or reference signal, where

the first association relationship includes an association relationship between a second parameter of the target TRP or the target reference signal and the first processing, and the second parameter is a received signal parameter of the target TRP or the target reference signal.

Optionally, the second parameter includes at least one of the following: a reference signal received power RSRP, reference signal received quality RSRQ, a signal-to-noise ratio SNR, or a signal-to-interference-plus-noise ratio SINR.

Optionally, that the processor 910 performs respectively corresponding first processing on different pieces of first time-domain channel state information includes at least one of the following:

perform, by the first device based on a second association relationship, the first processing on target first time-domain channel state information; or
perform, by the first device based on the first indication information from the first node, the first processing on target first time-domain channel state information, where
the second association relationship includes at least one of the following:

an association relationship between the first processing and identifier information of a TRP associated with the target first time-domain channel state information; or
an association relationship between the first processing and identifier information of a reference signal associated with the target first time-domain channel state information.

Optionally, the radio frequency unit 901 is further configured to:

send second information to the first node, where the second information includes a third parameter respectively associated with each TRP or reference signal of the terminal, and the third parameter is a received signal parameter of the associated TRP or reference signal; and
receive second indication information from the first node, where the second indication information indicates the terminal to perform the first processing related to a third target parameter on the first time-domain channel state information, the first time-domain channel state information and the third target parameter are associated with the same TRP or reference signal of the terminal, and the third parameter includes the third target parameter.

Optionally, the third parameter includes at least one of the following: an RSRP, RSRQ, an SNR, or an SINR.

Optionally, in a case that the TRP of the terminal is associated with at least two reference signal resources,

the radio frequency unit 901 is further configured to separately perform measurement on reference signals on the at least two reference signal resources, to obtain at least two pieces of time-domain channel state information, where the at least two pieces of time-domain channel state information is in one-to-one correspondence with the at least two reference signal resources; and
the processor 910 is further configured to select, based on a second rule, one of the at least two pieces of time-domain channel state information as the first time-domain channel state information.

Optionally, the second rule includes at least one of the following:

selecting the time-domain channel state information corresponding to a reference signal resource with a maximum RSRP;
selecting the time-domain channel state information corresponding to a reference signal resource with a maximum SINR;
selecting the time-domain channel state information corresponding to a reference signal resource with maximum RSRQ;
selecting the time-domain channel state information corresponding to a reference signal resource with a maximum SNR; or
selecting the time-domain channel state information corresponding to a reference signal resource with a minimum channel estimation error.

Optionally, the first information includes at least one of the following:

a first information field, where the first information field carries indication information for indicating whether the second time-domain channel state information is a zero vector;
a second information field, where the second information field carries a location of a non-zero element in the second time-domain channel state information; or
a third information field, where the second information field carries values at positions of non-zero elements in the second time-domain channel state information.

Optionally, the first information further includes at least one of the following:

a TRP identifier associated with the second time-domain channel state information;
a cell identifier associated with the second time-domain channel state information;
a port identifier associated with the second time-domain channel state information;
a reference signal identifier associated with the second time-domain channel state information;
an identifier of a target model associated with the second time-domain channel state information, where the target model is used for inputting the second time-domain channel state information, to obtain at least one of position information of a terminal and feature information related to the position information;
a function identifier of a target model associated with the second time-domain channel state information; or
a reference signal resource identifier associated with the second time-domain channel state information.

It may be understood that, implementation processes of all implementations in this embodiment can refer to the relevant descriptions of the information transmission method in this embodiment shown in FIG. 2, and the same or corresponding technical effects can be achieved. Details are not described herein again to avoid repetition.

An embodiment of this application further provides a network-side device, including a processor and a communication interface. The communication interface is coupled to the processor, and the processor is configured to run a program or instructions, to implement steps of the method embodiment shown in FIG. 4. The network-side device embodiment corresponds to the foregoing network-side device method embodiment, and each implementation process and implementation of the foregoing method embodiment may be used in the network-side device embodiment, and the same technical effects can be achieved.

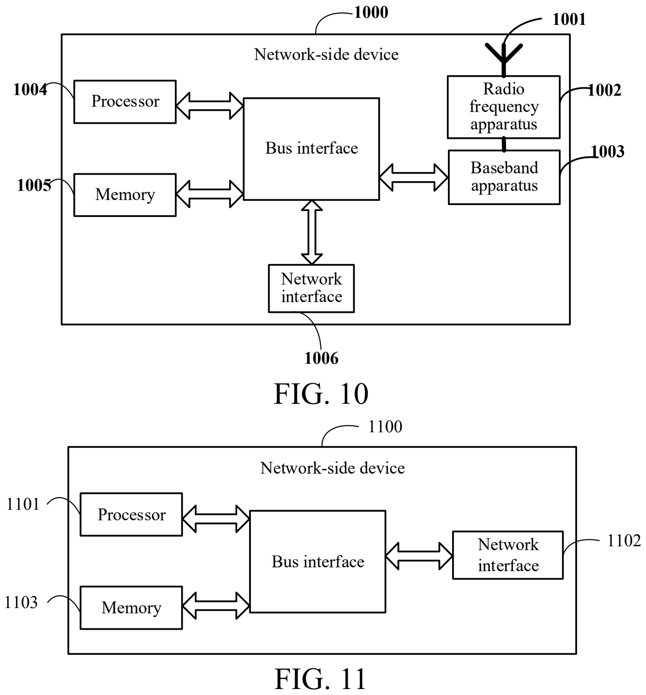

In some implementations, an embodiment of this application further provides a network-side device. As shown in FIG. 10, the network-side device 1000 includes: an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information through the antenna 1001 and sends the received information to the baseband apparatus 1003 for processing. In a downlink direction, the baseband apparatus 1003 processes to-be-sent information and sends the information to the radio frequency apparatus 1002, and the radio frequency apparatus 1002 processes the received information and sends the information through the antenna 1001.

The method performed by the network-side device in the foregoing embodiment may be implemented in the baseband apparatus 1003. The baseband apparatus 1003 includes a baseband processor.

The baseband apparatus 1003 may include, for example, at least one baseband board, and a plurality of chips are disposed on the baseband board. As shown in FIG. 10, one of the chips is, for example, the baseband processor, connected to the memory 1005 through a bus interface, to invoke a program in the memory 1005, and perform an operation performed by the network device shown in the foregoing method embodiment.

The network-side device may further include a network interface 1006. The interface is, for example, a common public radio interface (Common Public Radio Interface, CPRI).

In some embodiments, the network-side device 1000 in this embodiment of this application further includes: instructions or a program stored in the memory 1005 and run on the processor 1004. The processor 1004 invokes the instructions or the program in the memory 1005, to perform the methods performed by the modules shown in FIG. 6 or FIG. 7, and the same technical effects are achieved. Details are not described herein again to avoid repetition.

In some implementations, an embodiment of this application further provides a network-side device. As shown in FIG. 11, the network-side device 1100 includes: a processor 1101, a network interface 1102, and a memory 1103. The network interface 1102 is, for example, a common public radio interface (Common Public Radio Interface, CPRI).

In some implementations, the network-side device 1100 in this embodiment of this application further includes: instructions or a program stored in the memory 1103 and run on the processor 1101. The processor 1101 invokes the instructions or the program in the memory 1103, to perform the methods performed by the modules shown in FIG. 7, and the same technical effects are achieved. Details are not described herein again to avoid repetition.

An embodiment of this application further provides a readable storage medium. The readable storage medium stores a program or instructions, and when the program or the instructions are executed by a processor, all processes of the method embodiment shown in FIG. 2 or FIG. 4 are implemented, and the same technical effects can be achieved. Details are not described herein again to avoid repetition.

The processor is the processor in the terminal described in the foregoing embodiment. The readable storage medium includes a computer-readable storage medium, for example, a computer read-only memory ROM, a random access memory RAM, a magnetic or an optical disc, or the like. In some examples, the readable storage medium may be a non-transient readable storage medium.

An embodiment of this application further provides a chip. The chip includes a processor and a communication interface. The communication interface is coupled to the processor, and the processor is configured to run a program or instructions, to implement all processes of the method embodiment shown in FIG. 2 or FIG. 4, and the same technical effects can be achieved. Details are not described herein again to avoid repetition.

It should be understood that, the chip in this embodiment of this application may alternatively be referred to as a system-level chip, a system chip, a chip system, a system-on-chip, or the like.

A computer program/program product is further provided in the embodiments of the disclosure. The computer program/program product is stored in a storage medium, the computer program/program product is executed by at least one processor, so as to implement various processes in the method embodiment shown in FIG. 2 or FIG. 4, and achieve the same technical effects, which will not be repeated herein to avoid repetitions.

An embodiment of this application further provides a communication system, including: a first device and a first node, where the first device may be configured to perform steps of the foregoing information transmission method, and the first node may be configured to perform steps of the foregoing information processing method.

It should be noted that, the terms "include", "comprise", or any other variation thereof in this specification is intended to cover a non-exclusive inclusion, so that a process, a method, an article, or an apparatus that includes a list of elements not only includes those elements but also includes other elements that are not expressly listed, or further includes elements inherent to such a process, a method, an article, or an apparatus. An element preceded by "includes a" does not, without more constraints, preclude the presence of additional identical elements in the process, the method, the article, or the apparatus that includes the element. In addition, it should be noted that, scopes of the method and the apparatus in the implementations of this application are not limited to performing functions in an order shown or discussed, but may include performing functions in a substantially concurrent manner or in reverse order depending on functionality involved. For example, the methods described may be performed in an order different from that described, and various steps may alternatively be added, omitted, or combined. In addition, features described with reference to some examples may alternatively be combined in another example.

According to the descriptions of the foregoing implementations, a person skilled in the art may clearly learn that the method according to the foregoing embodiment may be implemented by a computer software product in addition to a necessary universal hardware platform, or by using hardware. The computer software product is stored in a storage medium (for example, a ROM, a RAM, a magnetic disk, an optical disc, or the like) including several instructions to enable a terminal or a network-side device to perform the methods described in embodiments of this application.

Embodiments of this application are described with reference to the accompanying drawings. This application is not limited to the specific implementations described above, and the specific implementations described above are merely examples and not limited. A person of ordinary skill in the art may also make various forms of implementations under the inspiration of this application and without departing from the purpose of this application and the protection scope of the claims, and such implementations shall all fall within the protection scope of this application.

**Claims**

1. An information transmission method, comprising:

performing, by a first device, first processing on first time-domain channel state information, to obtain second time-domain channel state information, wherein a data size of the first time-domain channel state information is greater than a data size of the second time-domain channel state information; and
sending, by the first device, first information to a first node, wherein the first information is related information of the second time-domain channel state information, wherein
the first time-domain channel state information is time-domain channel state information obtained by the first device through measurement based on a reference signal.

2. The method according to claim 1, wherein the first time-domain channel state information comprises at least one of the following:

time-domain channel state information obtained through measurement based on at least one reference signal associated with the same transmission reception point TRP; or
time-domain channel state information obtained through measurement based on a reference signal associated with at least one TRP.

3. The method according to claim 1 or 2, wherein the first processing comprises at least one of the following:

truncation processing;

filtering processing;
normalization processing; or
quantization processing.

4. The method according to claim 3, wherein performing, by the first device, the first processing on the first time-domain channel state information comprises:
performing, by the first device, the first processing on the first time-domain channel state information based on a first parameter, wherein the first parameter is a parameter related to the first processing.

5. The method according to claim 4, wherein in a case that the first processing comprises the truncation processing, the first parameter comprises at least one of the following:

a start location of a truncation window;
an end location of a truncation window;
a length of a truncation window;
a first threshold, wherein the first threshold is used for selecting a start location of a truncation window;
a second threshold, wherein the second threshold is used for selecting an end location of a truncation window; or
a first offset, wherein the first offset indicates a relationship between a start location of a truncation window and a reference position.

6. The method according to claim 4 or 5, wherein in a case that the first processing comprises the filtering processing, the first parameter comprises at least one of the following:

a filter parameter;
a first threshold, wherein the filtering processing comprises: setting to 0 a sample, in the first time-domain channel state information, with an amplitude of a time-domain sample less than the first threshold; or
a second threshold, wherein the filtering processing comprises: setting to 0 a sample, in the first time-domain channel state information, with a ratio of an amplitude of a time-domain sample to a maximum amplitude less than the second threshold, wherein the maximum amplitude is an amplitude of a sample with the maximum amplitude in the first time-domain channel state information.

7. The method according to any one of claims 4 to 6, wherein the normalization processing is used for normalizing the amplitude of the time-domain sample in the first time-domain channel state information to be between 0 and 1.

8. The method according to any one of claims 4 to 7, wherein the normalization processing comprises at least one of the following:

performing normalization processing on the first time-domain channel state information obtained through measurement based on at least two reference signals associated with one TRP;
performing normalization processing on the first time-domain channel state information obtained through measurement based on a reference signal associated with at least two TRPs; or
performing normalization processing on the first time-domain channel state information obtained through measurement based on a reference signal associated with a target TRP and the first time-domain channel state information obtained through measurement based on a reference signal associated with a reference TRP.

9. The method according to any one of claims 4 to 8, wherein in a case that the first processing comprises the quantization processing, the first parameter comprises at least one of the following:

quantization manner information;
quantization precision;
a quantization interval; or
a quantization range.

10. The method according to any one of claims 1 to 9, further comprising:
receiving, by the first device, first indication information from the first node, wherein the first indication information indicates at least one of the following:

performing, by the first device, the first processing on the first time-domain channel state information; or

reporting, by the first device to the first node, related information of the second time-domain channel state information.

11. The method according to claim 10, wherein in a case of performing, by the first device, the first processing on the first time-domain channel state information based on the first parameter, the first indication information comprises the first parameter.

12. The method according to any one of claims 1 to 11, wherein in a case that there are at least two reference signals or TRPs associated with the first time-domain channel state information, performing, by the first device, the first processing on the first time-domain channel state information comprises at least one of the following:

performing, by the first device, the same first processing on different pieces of first time-domain channel state information;
performing, by the first device, respectively corresponding first processing on different pieces of first time-domain channel state information;
performing, by the first device based on a first rule, respectively corresponding first processing on first time-domain channel state information associated with different TRPs or reference signals;
performing, by the first device based on second indication information from the first node, respective corresponding first processing on first time-domain channel state information associated with different TRPs or reference signals; or
performing, by the first device based on third indication information from the first node, the same first processing on first time-domain channel state information associated with different TRPs or reference signals.

13. The method according to claim 12, wherein performing, by the first device based on the first rule, respectively corresponding first processing on the first time-domain channel state information associated with different TRPs or reference signals comprises:

determining, by the first device based on a first association relationship, to perform the first processing on the first time-domain channel state information associated with the target TRP or reference signal, wherein
the first association relationship comprises an association relationship between a second parameter of the target TRP or the target reference signal and the first processing, and the second parameter is a received signal parameter of the target TRP or the target reference signal.

14. The method according to claim 12, wherein performing, by the first device, respectively corresponding first processing on different pieces of first time-domain channel state information comprises at least one of the following:

performing, by the first device based on a second association relationship, the first processing on target first time-domain channel state information; or
performing, by the first device based on the first indication information from the first node, the first processing on target first time-domain channel state information, wherein
the second association relationship comprises at least one of the following:

an association relationship between the first processing and identifier information of a TRP associated with the target first time-domain channel state information; or
an association relationship between the first processing and identifier information of a reference signal associated with the target first time-domain channel state information.

15. The method according to claim 9, further comprising:

sending, by the first device, second information to the first node, wherein the second information comprises a third parameter respectively associated with each TRP or reference signal of the first device, and the third parameter is a received signal parameter of the associated TRP or reference signal; and
receiving, by the first device, second indication information from the first node, wherein the second indication information indicates the first device to perform the first processing related to a third target parameter on the first time-domain channel state information, the first time-domain channel state information and the third target parameter are associated with the same TRP or reference signal of the first device, and the third parameter comprises the third target parameter.

16. The method according to any one of claims 1 to 15, wherein in a case that the TRP of the first device is associated with at least two reference signal resources, the method further comprises:

separately performing, by the first device, measurement on reference signals on the at least two reference signal resources, to obtain at least two pieces of time-domain channel state information, wherein the at least two pieces of time-domain channel state information is in one-to-one correspondence with the at least two reference signal resources; and

selecting, by the first device based on a second rule, one of the at least two pieces of time-domain channel state information as the first time-domain channel state information.

17. The method according to claim 16, wherein the second rule comprises at least one of the following:

selecting the time-domain channel state information corresponding to a reference signal resource with a maximum RSRP;

selecting the time-domain channel state information corresponding to a reference signal resource with a maximum SINR;

selecting the time-domain channel state information corresponding to a reference signal resource with maximum RSRQ;

selecting the time-domain channel state information corresponding to a reference signal resource with a maximum SNR; or

selecting the time-domain channel state information corresponding to a reference signal resource with a minimum channel estimation error.

18. The method according to any one of claims 1 to 17, wherein the first information comprises at least one of the following:

a first information field, wherein the first information field carries indication information for indicating whether the second time-domain channel state information is a zero vector;

a second information field, wherein the second information field carries a location of a non-zero element in the second time-domain channel state information; or

a third information field, wherein the second information field carries values at positions of non-zero elements in the second time-domain channel state information.

19. The method according to claim 18, wherein the first information further comprises at least one of the following:

a TRP identifier associated with the second time-domain channel state information;

a cell identifier associated with the second time-domain channel state information;

a port identifier associated with the second time-domain channel state information;

a reference signal identifier associated with the second time-domain channel state information;

an identifier of a target model associated with the second time-domain channel state information, wherein the target model is used for inputting the second time-domain channel state information, to obtain at least one of position information of a terminal and feature information related to the position information;

a function identifier of a target model associated with the second time-domain channel state information; or

a reference signal resource identifier associated with the second time-domain channel state information.

20. An information processing method, comprising:

receiving, by a first node, first information from a first device, wherein the first information comprises related information of second time-domain channel state information obtained through first processing, a data size of the second time-domain channel state information is less than a data size of first time-domain channel state information, and the first time-domain channel state information is time-domain channel state information before the first processing;

determining, by the first node based on the first information, target time-domain channel state information; and

inputting, by the first node, the target time-domain channel state information into a target model, and obtaining at least one of the following outputs of the target model:

position information of a terminal, wherein the terminal is related to the first device; or

feature information related to position information of the terminal.

21. The method according to claim 20, further comprising:
sending, by the first node, first indication information to the first device, wherein the first indication information indicates at least one of the following:

performing, by the first device, the first processing on the first time-domain channel state information; or reporting, by the first device to the first node, related information of the second time-domain channel state information.

22. The method according to claim 20 or 21, further comprising:
sending, by the first node, third indication information to the first device, wherein the third indication information indicates to perform the same first processing on first time-domain channel state information associated with different TRPs or reference signals.

23. The method according to any one of claims 20 to 22, further comprising:

receiving, by the first node, second information from the first device, wherein the second information comprises a third parameter respectively associated with each TRP or reference signal of the first device, and the third parameter is a received signal parameter of the associated TRP or reference signal;
determining, by the first node based on a third target parameter, to perform the first processing on the first time-domain channel state information, wherein the first time-domain channel state information and the third target parameter are associated with the same TRP or reference signal of the first device, and the third parameter comprises the third target parameter; and
sending, by the first node based on the second information, second indication information to the first device, wherein the second indication information indicates the first device to perform respectively corresponding first processing on time-domain channel state information associated with different TRPs or reference signals.

24. The method according to any one of claims 20 to 23, wherein the first information comprises at least one of the following:

a first information field, wherein the first information field carries indication information for indicating whether the second time-domain channel state information is a zero vector;
a second information field, wherein the second information field carries a location of a non-zero element in the second time-domain channel state information; or
a third information field, wherein the second information field carries values at positions of non-zero elements in the second time-domain channel state information.

25. The method according to claim 24, wherein the first information further comprises at least one of the following:

a TRP identifier associated with the second time-domain channel state information;
a cell identifier associated with the second time-domain channel state information;
a port identifier associated with the second time-domain channel state information;
a reference signal identifier associated with the second time-domain channel state information;
an identifier of a target model associated with the second time-domain channel state information;
a function identifier of a target model associated with the second time-domain channel state information; or
a reference signal resource identifier associated with the second time-domain channel state information.

26. An information transmission apparatus, comprising:

a first processing module, configured to perform first processing on first time-domain channel state information, to obtain second time-domain channel state information, wherein a data size of the first time-domain channel state information is greater than a data size of the second time-domain channel state information; and
a first sending module, configured to send first information to a first node, wherein the first information is related information of the second time-domain channel state information, wherein
the first time-domain channel state information is time-domain channel state information obtained by the first device through measurement based on a reference signal.

27. An information processing apparatus, comprising:

a first receiving module, configured to receive first information from a first device, wherein the first information comprises related information of second time-domain channel state information obtained through first processing, a data size of the second time-domain channel state information is less than a data size of first time-domain channel state information, and the first time-domain channel state information is time-domain channel state information before the first processing;

a first determining module, configured to determine target time-domain channel state information based on the first information; and

a second processing module, configured to input the target time-domain channel state information into a target model, and obtain at least one of the following outputs of the target model:

position information of a terminal, wherein the terminal is related to the first device; or
feature information related to position information of the terminal.

28. A terminal, comprising a processor and a memory, wherein the memory stores a program or instructions that can be run on the processor, and when the program or the instructions are executed by the processor, steps of the information transmission method according to any one of claims 1 to 19 are implemented.

29. A network-side device, comprising a processor and a memory, wherein the memory stores a program or instructions that can be run on the processor, and when the program or the instructions are executed by the processor, steps of the information transmission method according to any one of claims 1 to 19 are implemented, or steps of the information processing method according to any one of claims 20 to 25 are implemented.

30. A readable storage medium, wherein the readable storage medium stores a program or instructions, and when the program or the instructions are executed by a processor, steps of the information transmission method according to any one of claims 1 to 19 are implemented, or steps of the information processing method according to any one of claims 20 to 25 are implemented.

Network-side device

11 Terminal

11 Terminal

FIG. 1

A first device performs first processing on first time-domain channel state information, to obtain second time-domain channel state information — 201

The first device sends first information to a first node, where the first information is related information of the second time-domain channel state information — 202

FIG. 2

Input layer    Hidden layer    Output layer

$X_1$

$X_2$

$X_n$

$Y$

FIG. 3a

$$a_1 \quad w_1$$

$$\vdots \qquad \vdots$$

$$a_k \quad \xrightarrow{w_k}$$

$$\vdots$$

$$\vdots \qquad w_K$$

$$a_K$$

$$+ \xrightarrow{z} \sigma(z) \longrightarrow a$$

Activation function

Weight

$b$     Bias

## FIG. 3b

| | |
|---|---|
| A first node receives first information from a first device, where the first information includes related information of second time-domain channel state information obtained after first processing | 401 |
| The first node determines, based on the first information, target time-domain channel state information | 402 |
| The first node inputs the target time-domain channel state information into a target model, and obtains at least one of the following outputs of the target model: position information of a terminal, or feature information related to position information of the terminal | 403 |

## FIG. 4

Quantity of TRPs = 18; Quantization precision = 8 bits

FIG. 5

FIG. 6

700

Information processing apparatus

701

First receiving module

702

First determining module

703

Second processing module

FIG. 7

800

Communication device

801

Processor

Memory

802

FIG. 8

FIG. 9

FIG. 10

FIG. 11

## INTERNATIONAL SEARCH REPORT

| International application No. |
| --- |
| **PCT/CN2024/085232** |

**A.     CLASSIFICATION OF SUBJECT MATTER**

H04L 43/02(2022.01)i

According to International Patent Classification (IPC) or to both national classification and IPC

**B.     FIELDS SEARCHED**

Minimum documentation searched (classification system followed by classification symbols)

IPC: H04L 43/-

Documentation searched other than minimum documentation to the extent that such documents are included in the fields searched

Electronic data base consulted during the international search (name of data base and, where practicable, search terms used)

CNTXT, CNKI: 时域, 时域信道状态, 时域信道状态信息, 信道状态信息, 参考信号, 窗, 分割, 归一化, 简化, 截断, 截取, 量化, 滤波, 切分, 压缩, 部分. DWPI, ENTXT, WPABS, 3GPP: Time domain, Truncat+, Compress+, Quantificat+, Simplificat+, Normaliz, Filter, part, Section, TRP, Channel State Information

**C.     DOCUMENTS CONSIDERED TO BE RELEVANT**

| Category* | Citation of document, with indication, where appropriate, of the relevant passages | Relevant to claim No. |
| --- | --- | --- |
| X | CN 102104452 A (HUAWEI TECHNOLOGIES CO., LTD.) 22 June 2011 (2011-06-22) description, paragraphs 6-137 | 1-4, 7, 9-11, 26-30 |
| Y | CN 102104452 A (HUAWEI TECHNOLOGIES CO., LTD.) 22 June 2011 (2011-06-22) description, paragraphs 6-137 | 3-4, 7, 9-11, 20-21 |
| Y | CN 106850172 A (NANJING UNIVERSITY OF SCIENCE AND TECHNOLOGY) 13 June 2017 (2017-06-13) description, paragraph 4 | 3-4, 7, 9-11, 20-21 |
| A | CN 111602378 A (HUAWEI TECHNOLOGIES CO., LTD.) 28 August 2020 (2020-08-28) entire document | 1-30 |
| A | CN 113766528 A (VIVO COMMUNICATION TECHNOLOGY CO., LTD.) 07 December 2021 (2021-12-07) entire document | 1-30 |
| A | WO 2023028742 A1 (QUALCOMM INC.) 09 March 2023 (2023-03-09) entire document | 1-30 |

☑ Further documents are listed in the continuation of Box C.       ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 May 2024** | **23 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/085232**

**C. DOCUMENTS CONSIDERED TO BE RELEVANT**

| Category* | Citation of document, with indication, where appropriate, of the relevant passages | Relevant to claim No. |
|---|---|---|
| A | HUAWEI HISILICON. "R1-2203140, Evaluation on AI/ML for CSI feedback enhancement" *3GPP TSG-RAN WG1 Meeting #109-e*. 30 April 2022 (2022-04-30), entire document | 1-30 |

## INTERNATIONAL SEARCH REPORT
### Information on patent family members

International application No.

**PCT/CN2024/085232**

| Patent document cited in search report | | | Publication date (day/month/year) | Patent family member(s) | | | Publication date (day/month/year) |
|---|---|---|---|---|---|---|---|
| CN | 102104452 | A | 22 June 2011 | WO | 2011076110 | A1 | 30 June 2011 |
| | | | | US | 2012257579 | A1 | 11 October 2012 |
| | | | | US | 8995369 | B2 | 31 March 2015 |
| | | | | CN | 102104452 | B | 11 September 2013 |
| CN | 106850172 | A | 13 June 2017 | None | | | |
| CN | 111602378 | A | 28 August 2020 | CN | 111602378 | B | 28 December 2021 |
| | | | | WO | 2019157709 | A1 | 22 August 2019 |
| CN | 113766528 | A | 07 December 2021 | None | | | |
| WO | 2023028742 | A1 | 09 March 2023 | None | | | |

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310371464